# EUROPEAN PATENT APPLICATION

(11) **EP 4 823 045 A1**
(43) Date of publication of application: **14.10.2026**
(21) Application number: 24915456.8
(22) Date of filing: 30.12.2024
(51) Int. Cl.: H04L 12/28, H04L 67/61, G16Y 10/80, G16Y 40/30, H04L 67/303, H04L 67/52, H04L 67/51

(54) **ELECTRONIC DEVICE FOR PROVIDING INTERNET OF THINGS-BASED SERVICE, AND OPERATING METHOD THEREOF**

(30) Priority: 04.01.2024 KR 20240001273; 12.04.2024 KR 20240049500
(71) Applicant: Samsung Electronics Co., Ltd., Suwon-si, Gyeonggi-do 16677 (KR)
(72) Inventor: PARK, Junhyung, Suwon-si Gyeonggi-do 16677 (KR); YOU, Taewoo, Suwon-si Gyeonggi-do 16677 (KR); KIM, Seokhyun, Suwon-si Gyeonggi-do 16677 (KR); SOHN, Jeonghyo, Suwon-si Gyeonggi-do 16677 (KR)
(74) Representative: Gulde & Partner
(86) International application number: PCT/KR2024/021497
(87) International publication number: WO 2025/147044

(57) **Abstract**

According to one embodiment, electronic devices (102, 104, 220) are provided. The electronic device comprises: a communication circuit (302); one or more processors (304) including processing circuitry; and a memory (306) for storing instructions. When executed individually or collectively by the one or more processors, the instructions cause the electronic device to: receive, through the communication circuit, a first signal including information related to the plurality of external electronic devices (102, 104,220); identify an event for triggering the transmission of the information related to the plurality of external electronic devices; determine the priority of each of the plurality of external electronic devices on the basis of the event; and, on the basis of the priority of each of the plurality of external electronic devices, transmit, through the communication circuit, a second signal including the information related to the electronic device and at least some of the information related to the plurality of external electronic devices. Additionally, other embodiments are possible.

## Description

### [Technical Field]

An embodiment of the disclosure relates to an electronic device for providing an internet of things (IoT)-based service and an operating method thereof.

### [Background Art]

The Internet, which is a human centered connectivity network where humans generate and consume information, is now evolving to the Internet of things (IoT) network where distributed entities, such as things, exchange and process information. The Internet of everything (IoE) technology may be an example in which a big data processing technology through connection with a cloud server is combined with the IoT technology.

As technology elements, such as a sensing technology, a wired/wireless communication and network infrastructure, a service interface technology, and a security technology have been demanded for implementing the IoT technology, and various technologies for a connection between things such as a sensor network, a machine-to-machine (M2M) communication, machine type communication (MTC), and so forth have been recently researched.

Such an IoT environment may provide intelligent Internet technology (IT) services that create a new value to human life by collecting and analyzing data generated among connected things. The IoT technology may be applied to various services such as a smart home service, a smart building service, a smart city service, a smart car service or connected car service, a smart grid service, a health care service, a smart appliance service, and an advanced medical service through convergence and combination between an existing IT technology and various industrial applications.

Among various services based on an IoT technology, a representative service may be a smart home service (e.g., Samsung^{™} SmartThings service). In the smart home service, an electronic device (e.g., an manager device (e.g., a smartphone)) managing the smart home service identifies whether an external electronic device (e.g., an IoT device (e.g., a smart home device)) such as a television, a speaker, and/or a refrigerator is close to the electronic device, if the external electronic device is close to the electronic device, the electronic device provides a function of displaying or recommending a function associated with a remote controller used for controlling and/or managing the external electronic device via an IoT-based application (e.g., a smart home application (e.g., Samsung^{™} SmartThings application)). Additionally, in the smart home service, a user of the electronic device undergoes a separate, cumbersome manual invitation procedure, such as an email address-based invitation procedure, a contact-based invitation procedure, and/or a quick response (QR) code-based invitation procedure, in order to invite another user to enable the other user to use the smart home service.

### [Disclosure]

### [Technical Solution]

According to an embodiment of the disclosure, an electronic device (102; 104; 220) may comprise communication circuitry (302), one or more processors (304) including processing circuitry, and memory (306) storing instructions.

According to an embodiment of the disclosure, the instructions, when executed by the one or more processors individually or collectively, may cause the electronic device to receive a first signal including information related to a plurality of external electronic devices (102; 104; 220) via the communication circuitry.

According to an embodiment of the disclosure, the instructions, when executed by the one or more processors individually or collectively, may cause the electronic device to identify an event which triggers transmission of the information related to the plurality of external electronic devices.

According to an embodiment of the disclosure, the instructions, when executed by the one or more processors individually or collectively, may cause the electronic device to, based on the event, determine a priority of each of the plurality of external electronic devices.

According to an embodiment of the disclosure, the instructions, when executed by the one or more processors individually or collectively, may cause the electronic device to, based on the priority of each of the plurality of external electronic devices, transmit, via the communication circuitry, a second signal including at least a portion of the information related to the plurality of external electronic devices and information related to the electronic device.

According to an embodiment of the disclosure, an electronic device (102; 104; 220) may comprise communication circuitry (302), one or more processors (304) including processing circuitry, and memory (306) storing instructions.

According to an embodiment of the disclosure, the instructions, when executed by the one or more processors individually or collectively, may cause the electronic device to identify an event which triggers transmission of first information for at least one external electronic device (101) to control at least one other external electronic device (102; 104; 220).

According to an embodiment of the disclosure, the instructions, when executed by the one or more processors individually or collectively, may cause the electronic device to, based on the event, transmit, via the communication circuitry, a first signal including the first information and second information related to the electronic device.

According to an embodiment of the disclosure, an electronic device (101) may comprise communication circuitry (190), one or more processors (120) including processing circuitry, a display (160), and memory (130) storing instructions.

According to an embodiment of the disclosure, the instructions, when executed by the one or more processors individually or collectively, may cause the electronic device to receive, via the communication circuitry from an external electronic device (102; 104; 220), a first signal including third information which is at least a portion of first information related to the external electronic device and second information related to a plurality of other external electronic devices (102; 104; 220).

According to an embodiment of the disclosure, the instructions, when executed by the one or more processors individually or collectively, may cause the electronic device to, based on reception of the first signal, output, via the display, a screen related to the first information and the third information, or perform a control operation for the external electronic device and the plurality of other external electronic devices based on the first information and the third information.

According to an embodiment of the disclosure, an electronic device (101) may comprise communication circuitry (190), one or more processors (120) including processing circuitry, a display (160), and memory (130) storing instructions.

According to an embodiment of the disclosure, the instructions, when executed by the one or more processors individually or collectively, may cause the electronic device to receive, via the communication circuitry from at least one external electronic device (102; 104; 220), a first signal including first information related to the at least one external electronic device and second information used for the electronic device to control at least one other external electronic device (102; 104; 220).

According to an embodiment of the disclosure, the instructions, when executed by the one or more processors individually or collectively, may cause the electronic device to, based on reception of the first signal, output, via the display, a screen related to the first information and the second information, or perform a control operation for the at least one external electronic device and the at least one other external electronic device based on the first information and the second information.

According to an embodiment of the disclosure, a storage medium storing at least one computer readable instruction may be provided.

According to an embodiment of the disclosure, at least one instruction, when executed by one or more processors (304) including processing circuitry of an electronic device (102; 104; 220) individually or collectively, may cause the electronic device to perform at least one operation.

According to an embodiment of the disclosure, the at least one operation may comprise receiving a first signal including information related to a plurality of external electronic devices (102; 104; 220).

According to an embodiment of the disclosure, the at least one operation may comprise identifying an event which triggers transmission of the information related to the plurality of external electronic devices.

According to an embodiment of the disclosure, the at least one operation may comprise, based on the event, determining a priority of each of the plurality of external electronic devices.

According to an embodiment of the disclosure, the at least one operation may comprise, based on the priority of each of the plurality of external electronic devices, transmitting a second signal including at least a portion of the information related to the plurality of external electronic devices and information related to the electronic device.

According to an embodiment of the disclosure, a storage medium storing at least one computer readable instruction may be provided.

According to an embodiment of the disclosure, at least one instruction, when executed by one or more processors (304) including processing circuitry of an electronic device (102; 104; 220), may cause the electronic device to perform at least one operation.

According to an embodiment of the disclosure, the at least one operation may comprise identifying an event which triggers transmission of first information for at least one external electronic device (101) to control at least one other external electronic device (102; 104; 220).

According to an embodiment of the disclosure, the at least one operation may comprise, based on the event, transmitting a first signal including the first information and second information related to the electronic device.

According to an embodiment of the disclosure, a storage medium storing at least one computer readable instruction may be provided.

According to an embodiment of the disclosure, the at least one computer readable instruction, when executed by one or more processors (120) of an electronic device (101), may cause the electronic device to perform at least one operation.

According to an embodiment of the disclosure, the at least one operation may comprise receiving, from an external electronic device (102; 104; 220), a first signal including third information which is at least a portion of first information related to the external electronic device and second information related to a plurality of other external electronic devices (102; 104; 220).

According to an embodiment of the disclosure, the at least one operation may comprise, based on reception of the first signal, outputting a screen related to the first information and the third information, or performing a control operation for the external electronic device and the plurality of other external electronic devices based on the first information and the third information.

According to an embodiment of the disclosure, a storage medium storing at least one computer readable instruction may be provided.

According to an embodiment of the disclosure, at least one instruction, when executed by one or more processors (120) including processing circuitry of an electronic device (101), may cause the electronic device to perform at least one operation.

According to an embodiment of the disclosure, the at least one operation may comprise receiving, from at least one external electronic device (102; 104; 220), a first signal including first information related to the at least one external electronic device and second information used for the electronic device to control at least one other external electronic device (102; 104; 220).

According to an embodiment of the disclosure, the at least one operation may comprise, based on reception of the first signal, outputting a screen related to the first information and the second information, or performing a control operation for the at least one external electronic device and the at least one other external electronic device based on the first information and the second information.

### [Description of Drawings]

FIG. 1 is a block diagram schematically illustrating an electronic device within a network environment according to an embodiment.
FIG. 2 is a diagram for describing a process of providing an IoT service in a wireless communication network according to an embodiment.
FIG. 3 is a block diagram illustrating an internal structure of an external electronic device according to an embodiment.
FIG. 4 is a block diagram illustrating an internal structure of a server according to an embodiment.
FIG. 5 is a diagram for describing a scheme of detecting presence of an adjacent external electronic device in an IoT-based service.
FIG. 6 is a diagram for describing a scheme of informing presence of an adjacent external electronic device in an IoT-based service according to an embodiment.
FIG. 7 is a diagram for describing an operation of transmitting an advertising packet and an associated advertising packet according to an embodiment.
FIG. 8 is a diagram for describing an operation of transmitting an advertising packet and an associated advertising packet according to an embodiment.
FIG. 9 is a diagram for describing an operation of transmitting an advertising packet and an associated advertising packet according to an embodiment.
FIG. 10 is a diagram for describing an operation of transmitting an advertising packet and an associated advertising packet according to an embodiment.
FIG. 11 is a diagram for describing an operation of transmitting an advertising packet and an associated advertising packet according to an embodiment.
FIG. 12A is a flowchart illustrating a process of determining a priority used for transmitting an associated advertising packet according to an embodiment.
FIG. 12B is a flowchart illustrating a process of determining a priority used for transmitting an associated advertising packet according to an embodiment.
FIG. 13 is a diagram for describing transmission of an advertising packet and an invitation code according to an embodiment.
FIG. 14 is a diagram for describing transmission of an advertising packet, an associated advertising packet, and an invitation code according to an embodiment.
FIG. 15 is a diagram illustrating a screen for controlling close external electronic devices according to an embodiment.
FIG. 16 is a diagram illustrating a screen for controlling close external electronic devices according to an embodiment.
FIG. 17 is a diagram illustrating a screen for controlling close external electronic devices according to an embodiment.
FIG. 18 is a diagram illustrating a screen for controlling close external electronic devices according to an embodiment.
FIG. 19 is a diagram illustrating a screen for controlling close external electronic devices according to an embodiment.
FIG. 20 is a diagram illustrating a screen for controlling close external electronic devices according to an embodiment.
FIG. 21 is a diagram illustrating a screen for controlling close external electronic devices according to an embodiment.
FIG. 22 is a diagram illustrating a screen for controlling close external electronic devices according to an embodiment.
FIG. 23 is a signal flow diagram illustrating a procedure for informing presence of an adjacent external electronic device in an IoT-based service according to an embodiment.
FIG. 24 is a flowchart illustrating an operating process of an electronic device according to an embodiment.

### [Mode for Invention]

Hereinafter, an embodiment of the disclosure will be described in detail with reference to the accompanying drawings. In the following description of an embodiment of the disclosure, a detailed description of relevant known functions or configurations incorporated herein will be omitted when it is determined that the description may make the subject matter of an embodiment of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

It should be noted that the technical terms used herein are only used to describe a specific embodiment, and are not intended to limit an embodiment of the disclosure. Alternatively, the technical terms used herein should be interpreted to have the same meaning as those commonly understood by a person skilled in the art to which the disclosure pertains, and should not be interpreted have excessively comprehensive or excessively restricted meanings unless particularly defined as other meanings. Alternatively, when the technical terms used herein are wrong technical terms that cannot correctly represent the idea of the disclosure, it should be appreciated that they are replaced by technical terms correctly understood by those skilled in the art. Alternatively, the general terms used in an embodiment of the disclosure should be interpreted as defined in dictionaries or interpreted in the context of the relevant part, and should not be interpreted to have excessively restricted meanings.

Alternatively, a singular expression used herein may include a plural expression unless they are definitely different in the context. As used herein, such an expression as "comprises" or "include", or the like should not be interpreted to necessarily include all elements or all operations described in the specification, and should be interpreted to be allowed to exclude some of them or further include additional elements or operations.

Alternatively, the terms including an ordinal number, such as expressions "a first" and "a second" may be used to describe various elements, but the corresponding elements should not be limited by such terms. These terms are used merely to distinguish between one element and any other element. For example, a first element may be termed a second element, and similarly, a second element may be termed a first element without departing from the scope of the disclosure.

It should be understood that when an element is referred to as being "connected" or "coupled" to another element, it may be connected or coupled directly to the other element, or any other element may be interposer between them. In contrast, it should be understood that when an element is referred to as being "directly connected" or "directly coupled" to another element, there are no element interposed between them.

Hereinafter, an embodiment of the disclosure will be described in detail with reference to the accompanying drawings. Regardless of drawing signs, the same or like elements are provided with the same reference numeral, and a repeated description thereof will be omitted. Alternatively, in describing an embodiment of the disclosure, a detailed description of relevant known technologies will be omitted when it is determined that the description may make the subject matter of the disclosure unclear. Alternatively, it should be noted that the accompanying drawings are presented merely to help easy understanding of the technical idea of the disclosure, and should not be construed to limit the technical idea of the disclosure. The technical idea of the disclosure should be construed to cover all changes, equivalents, and alternatives, in addition to the drawings.

Hereinafter, an electronic device will be described in an embodiment of the disclosure, but the electronic device may be referred to as a terminal, a mobile station, a mobile equipment (ME), a user equipment (UE), a user terminal (UT), a subscriber station (SS), a wireless device, a handheld device, and an access terminal (AT). Alternatively, in an embodiment of the disclosure, the electronic device may be a device having a communication function such as, for example, a mobile phone, a personal digital assistant (PDA), a smart phone, a wireless MODEM, and a notebook.

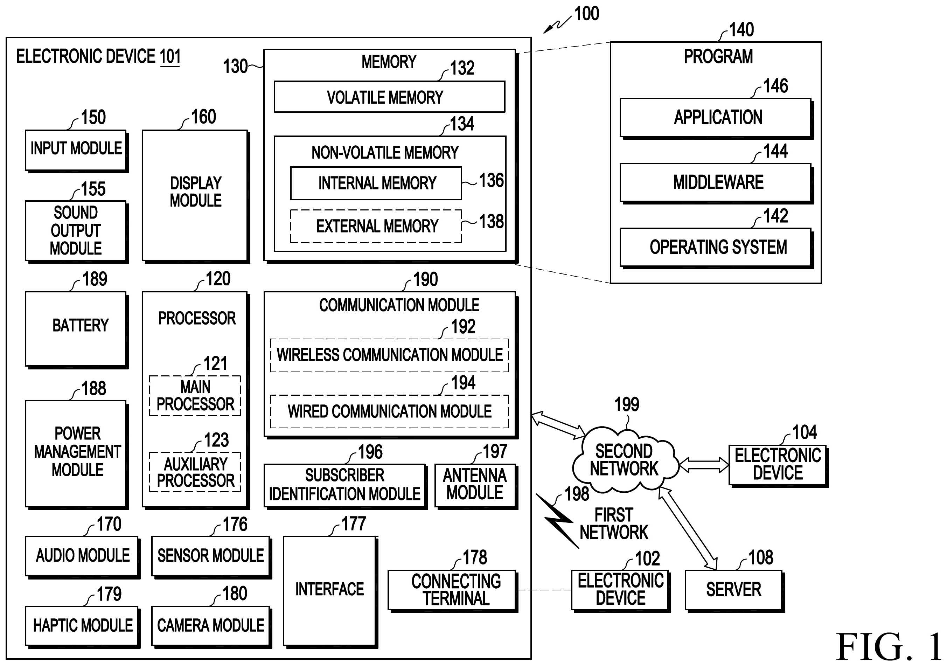

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active (e.g., executing an application) state. According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence model is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or an external electronic device (e.g., an electronic device 102 (e.g., a speaker or a headphone)) directly or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) (a tablet and/or a smart watch) directly or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

It should be noted that the communication module 190 may also be referred to as a "communication circuit", and thus the communication module 190 and the communication circuit 190 may be used interchangeably as necessary. The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1^{st}" and "2^{nd}," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or two or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

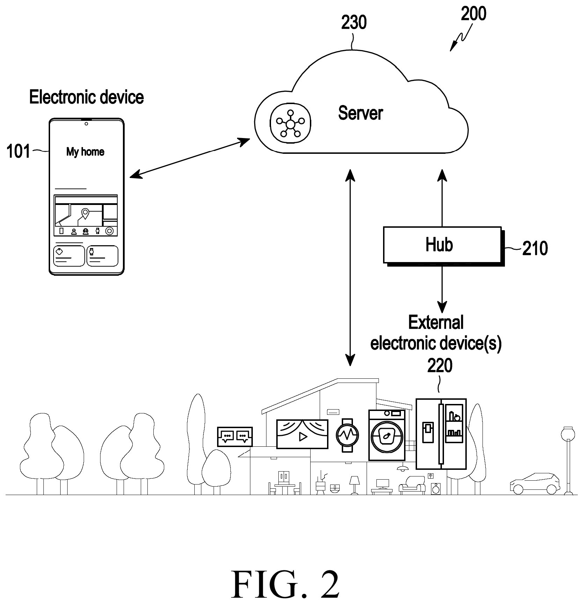

FIG. 2 is a diagram for describing a process of providing an IoT service in a wireless communication network 200 according to an embodiment.

Referring to FIG. 2, the wireless communication network 200 may be an IoT network (e.g., a smart home network).

According to an embodiment, an electronic device 101 (e.g., an electronic device 101 in FIG. 1) may provide an IoT service (e.g., a Samsung^{™} SmartThings service) which controls and/or manages external electronic devices (e.g., IoT devices) (e.g., an electronic device 102 or an electronic device 104 in FIG. 1) based on an IoT technology.

According to an embodiment, a hub 210 may be located at a set space (e.g., home and/or an office).

According to an embodiment, a server 230 may register an external electronic device(s) 220 using the IoT service and remotely control the registered external electronic device(s) 220. The server 230 may interwork with the electronic device 101 to remotely control the external electronic device(s) 220.

According to an embodiment, the external electronic device(s) 220 may be a device which interworks with the electronic device 101, the hub 210, and/or the server 230 to provide the IoT service. According to an embodiment, the external electronic device(s) 220 may be an IoT device (e.g., a home appliance such as a TV, a light, an air conditioner, a blind, an air purifier, a camera, an oven, and/or a speaker). According to an embodiment, the external electronic device(s) 220 may be located at a set space. In an embodiment, other external electronic devices (e.g., an application market server) may further exist in the wireless communication network 200.

According to an embodiment, the server 230 may receive data from the external electronic device(s) 220. According to an embodiment, the server 230 may communicate with the electronic device 101, the hub 210, and/or the external electronic device(s) 220 via the Internet. The server 230 may interwork with another server (not shown) which provides the IoT service to communicate with another external electronic device registered in the other server. Hereinafter, for convenience of a description, an IoT device directly connected to the server 230 will be referred to as a "Direct connected device", an IoT device connected to the server 230 via the hub 210 will be referred to as a "Hub connected device," and an IoT device connected to the server 230 via the other server will be referred to as a "Cloud connected device."

According to an embodiment, the hub 210 may communicate with the external electronic device(s) 220 based on any one of various communication schemes. The various communication schemes may include a ZigBee scheme and/or a Z-Wave scheme. According to an embodiment, the hub 210 may communicate with the external electronic device(s) 220 via a LAN.

According to an embodiment, the external electronic device(s) 220 may be located at various spaces (e.g., a living room, a family room, a kitchen, an entrance, and a laundry storage in a home space, and a first to Nth offices, a kitchen, and an entrance within an office space) within the wireless communication network 200, and may communicate with the electronic device 101 through the server 230.

According to an embodiment, the external electronic device(s) 220 may include various types of electronic devices which operate based on the IoT service. In an embodiment, the external electronic device(s) 220 may include a sensor or a switch for sensing a surrounding environment. The external electronic device(s) 220 may operate based on a user input or may operate automatically if a set condition is satisfied.

According to an embodiment, the electronic device 101 may receive data from the external electronic device(s) 220 and display a screen corresponding to the received data. According to an embodiment, when an IoT-based application (e.g., a Samsung^{™} SmartThings application) for controlling the external electronic device(s) 220 disposed in the various spaces within the wireless communication network 200 is executed, the electronic device 101 may output a user interface (UI) related to the executed IoT-based application.

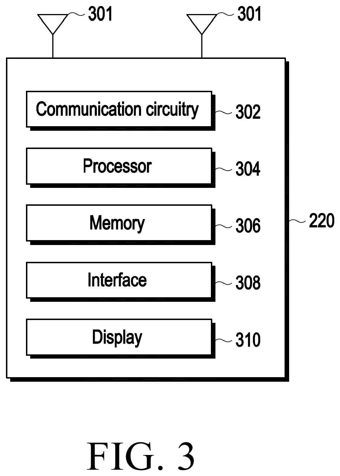

FIG. 3 is a block diagram illustrating an internal structure of an external electronic device 220 according to an embodiment.

Referring to FIG. 3, the external electronic device 220 (e.g., an electronic device 102 or an electronic device 104 in FIG. 1) may be a device which implements an IoT-based service in a wireless communication network (e.g., an IoT network). For example, an IoT-based network may be a smart home network, and the IoT-based service may be a SmartThings service.

The external electronic device 220 (e.g., an IoT device) may include antennas 301, communication circuitry 302, a processor 304, memory 306, an interface 308, and/or a display 310.

The external electronic device 220 may be a device supporting a long term evolution (LTE) scheme, a Zigbee scheme, a Z-Wave scheme, a Wi-Fi scheme, a Bluetooth low energy (BLE) scheme, a UWB scheme, and/or a GPS scheme. The external electronic device 220 may include communication circuitry 302 (e.g., a communication module 190 in FIG. 1) for transmitting and receiving signals to and from an electronic device (e.g., an electronic device 101 in FIG. 1 or 2), a hub (e.g., a hub 210 in FIG, 2), and/or a server (e.g., a server 108 in FIG. 1 and/or a server 230 in FIG. 2) using one or more antennas 301. In an embodiment, the one or more antennas 301 may be implemented as a part of an antenna module 198 in FIG. 1.

According to an embodiment, the communication circuitry 302 may include a plurality of communication circuits, and the plurality of communication circuits may include a communication circuit which is based on the LTE scheme, the BLE scheme, the UWB scheme, the Zigbee scheme, the Z-wave scheme, and/or the Wi-Fi scheme. According to an embodiment, the external electronic device 220 may not include a separate communication circuit which is based on each of the LTE scheme, the BLE scheme, the UWB scheme, the Zigbee scheme, the Z-Wave scheme, and/or the Wi-Fi scheme, and may include a communication circuit which is based on at least two of the LTE scheme, the Bluetooth scheme, the BLE scheme, the UWB scheme, the Zigbee scheme, the Z-Wave scheme, and/or the Wi-Fi scheme, or all of the LTE scheme, the BLE scheme, the UWB scheme, the Zigbee scheme, the Z-Wave scheme, and/or the Wi-Fi scheme. According to an embodiment, the communication circuit which is based on the at least two of the LTE scheme, the BLE scheme, the UWB scheme, the Zigbee scheme, the Z-Wave scheme, and/or the Wi-Fi scheme, or all of the LTE scheme, the BLE scheme, the UWB scheme, the Zigbee scheme, the Z-Wave scheme, and/or the Wi-Fi scheme may be the communication circuitry 302.

The external electronic device 220 may include an interface 308 (e.g., an interface 177 in FIG. 1) which provides a wired and/or wireless interface for communicating with components outside a network. In an embodiment, at least a portion of the one or more antennas 301, the communication circuitry 302, or the interface 308 may be implemented as at least a portion of the communication module 190 and the antenna module 198 in FIG. 1.

The external electronic device 220 may include a processor 304 (e.g., a processor 120 in FIG. 1) which may be implemented with one or more single-core processors or one or more multi-core processors, and memory 306 which stores instructions for an operation of the external electronic device 220.

According to an embodiment, the memory 306 may include a UI related to an application (e.g., a SmartThings application) for executing an IoT-based service, and images, user information, documents, databases, or related data for providing the UI. According to an embodiment, if the application for executing the IoT-based service is executed under the control of the processor 304, a display 310 may display the UI related to the executed application.

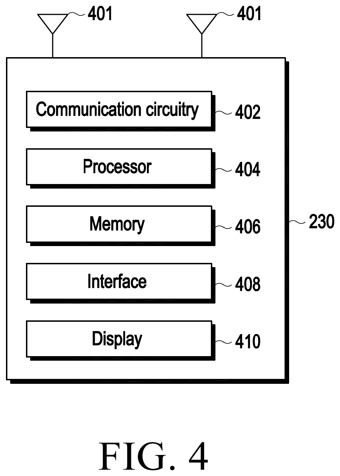

FIG. 4 is a block diagram illustrating an internal structure of a server 230 according to an embodiment.

Referring to FIG. 4, the server 230 (e.g., a server 108 in FIG. 1 or a server 230 in FIG. 2) may be a device which implements an IoT-based service (e.g., a SmartThings service) in a wireless communication network (e.g., an IoT network). For example, the IoT network may be a smart home network. The server 230 may include communication circuitry 402, a processor 404, memory 406, an interface 408, and/or a display 410. The communication circuitry 402, the processor 404, the memory 406, the interface 408, and/or the display 410 may each be implemented to be similar to or substantially the same as communication circuitry 302, a processor 304, memory 306, an interface 308, and/or a display 310 described in FIG. 3, so a detailed description thereof will be omitted.

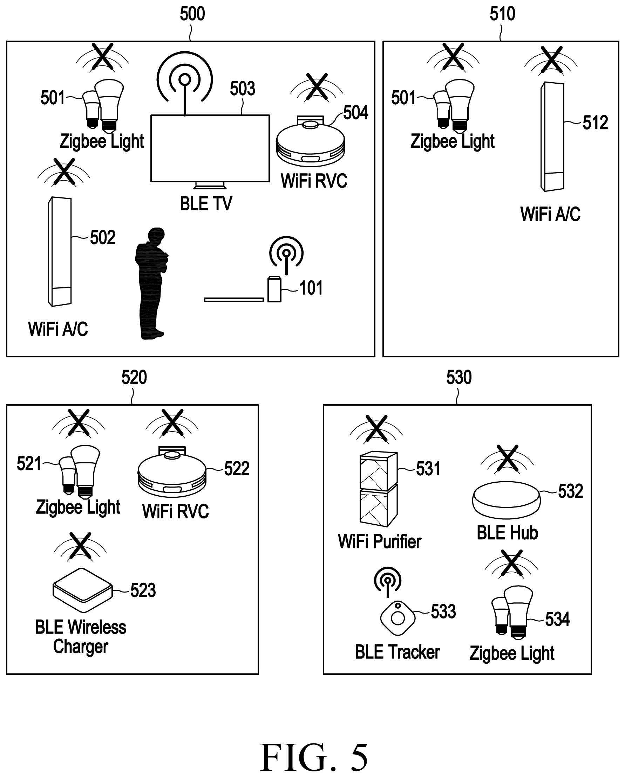

FIG. 5 is a diagram for describing a scheme of detecting presence of an adjacent external electronic device in an IoT-based service.

Referring to FIG. 5, in a smart home service (e.g., Samsung^{™} SmartThings service) which is a service based on an IoT technology, an electronic device 101 (e.g., an electronic device 101 in FIG. 1, 2, or 3)(e.g., a manager device (e.g., a smartphone)) for managing a smart home service identifies whether an external electronic device (e.g., an electronic device 102 or 104 in FIG. 1, an external electronic device(s) 220 in FIG. 2, or an external electronic device 220 in FIG. 3)(e.g., an IoT device (e.g., a smart home device)), such as a television (TV), a speaker, and/or a refrigerator, is close to the electronic device 101, and if the external electronic device is close to the electronic device 101, provides a function of displaying or recommending a remote controller used for controlling and/or managing the external electronic device or a function associated with the external electronic device via an IoT-based application (e.g., a smart home application (e.g., Samsung^{™} SmartThings application)).

The electronic device 101 may identify whether the external electronic device is close to the electronic device 101 based on a short-range communication scheme (e.g., a Bluetooth scheme, a Bluetooth low energy (BLE) scheme, a Wi-Fi scheme, an ultra-wide band (UWB), a Zigbee scheme, and/or a Z-Wave scheme) supported by the external electronic device, and thus a scheme with which the electronic device 101 identifies the external electronic device which is close to the electronic device 101 may have a limitation according to the short-range communication scheme supported by the external electronic device.

For example, in FIG. 5, a set space in which the smart home service is provided may include various spaces, and the various spaces may include a first space 500, a second space 510, a third space 520, and/or a fourth space 530. In FIG. 5, it will be assumed that a plurality of external electronic devices may exist in the set space, and among the plurality of external electronic devices, N (e.g., 13) external electronic devices support the short-range communication scheme, and the following description is given.

An electronic device 101, a first external electronic device 501, a second external electronic device 502, a third external electronic device 503, and/or a fourth external electronic device 504 may exist in the first space 500. The first external electronic device 501 may be a light supporting the ZigBee scheme, the second external electronic device 502 may be an air conditioner (AC) supporting the Wi-Fi scheme, the third external electronic device 503 may be a TV supporting the BLE scheme, and the fourth external electronic device 504 may be a robot vacuum cleaner (RVC) supporting the Wi-Fi scheme.

A fifth external electronic device 511 and/or a sixth external electronic device 512 may exist in the second space 510. The fifth external electronic device 511 may be a light supporting the ZigBee scheme, and the sixth external electronic device 512 may be an AC supporting the Wi-Fi scheme.

A seventh external electronic device 521, an eighth external electronic device 522, and/or a ninth external electronic device 523 may exist in the third space 520. The seventh external electronic device 521 may be a light supporting the ZigBee scheme, the eighth external electronic device 522 may be an RVC supporting the Wi-Fi scheme, and the ninth external electronic device 523 may be a wireless charger supporting the BLE scheme.

A tenth external electronic device 531, an eleventh external electronic device 532, a twelfth external electronic device 533, and/or a thirteenth external electronic device 534 may exist in the fourth space 530. The tenth external electronic device 531 may be a purifier supporting the Wi-Fi scheme, the eleventh external electronic device 532 may be a hub supporting the BLE scheme, the twelfth external electronic device 533 may be a tracker supporting the BLE scheme, and the thirteenth external electronic device 534 may be a light supporting the ZigBee scheme.

In FIG. 5, the electronic device 101 may identify whether a corresponding external electronic device is close to the electronic device 101 for only N (e.g., 13) external electronic devices supporting the short-range communication scheme among external electronic devices present in the set space in which the smart home service is provided, and thus, a scheme of detecting an external electronic device which is close to the electronic device 101 may have a limitation according to whether the corresponding external electronic device supports a short-range communication. Like this, the electronic device 101 may identify whether a corresponding external electronic device is close to the electronic device 101 only for external electronic devices supporting the short-range communication scheme among the external electronic devices present in the set space in which the smart home service is provided.

Alternatively, the electronic device 101 may detect an external electronic device close to the electronic device 101 among the external electronic devices present in the set space in which the smart home service is provided based on a network scanning scheme of an Internet protocol (IP) scheme. However, if corresponding external electronic devices do not support the Wi-Fi scheme, or if the corresponding external electronic devices are external electronic devices owned by a user other than the user of the electronic device 101, it may be difficult to detect the external electronic device close to the electronic device 101. Additionally, there may be an issue that the cost of the electronic device 101 performing network scanning to detect the external electronic device close to the electronic device 101 may increase current consumption in the electronic device 101.

Alternatively, if an arbitrary external electronic device (e.g., an external electronic device capable of performing an advertising process via the BLE scheme or the WiFi scheme) is mapped to a specific external electronic device among the external electronic devices present in the set space in which the smart home service is provided, and then the arbitrary external electronic device performs a role as an anchor for the specific external electronic device, the electronic device 101 may identify whether the specific external electronic device approaches the electronic device 101 via the anchor. However, in this case, since the electronic device 101 may only indirectly identify whether the specific external electronic device approaches the electronic device 101, accurate proximity detection may be difficult. Additionally, since indirect proximity detection has difficulty in accurately identifying status of the specific external electronic device, the electronic device 101, which identifies that the specific external electronic device is close to the electronic device 101 via the anchor, may require a series of procedures such as identifying information of the specific external electronic device mapped to the anchor and identifying the status of the specific external electronic device based on the identified information. Such a series of procedures may be useful only if completed based on a query procedure via a server (not shown in FIG. 5), so it may result in inefficiency of the proximity detection scheme.

Meanwhile, in the smart home service, in order for the user of the electronic device 101 to invite another user so that the other user may use the smart home service, separate inconvenient manual procedures, such as an email address-based invitation procedure, a contact-based invitation procedure, and/or a quick response (QR) code-based invitation procedure, are performed.

According to an embodiment of the disclosure, an electronic device (102; 104; 220) may comprise communication circuitry (302), one or more processors (304) including processing circuitry, and memory (306) storing instructions.

According to an embodiment of the disclosure, the instructions, when executed by the one or more processors individually or collectively, may cause the electronic device to receive a first signal including information related to a plurality of external electronic devices (102; 104; 220) via the communication circuitry.

According to an embodiment of the disclosure, the instructions, when executed by the one or more processors individually or collectively, may cause the electronic device to identify an event which triggers transmission of the information related to the plurality of external electronic devices.

According to an embodiment of the disclosure, the instructions, when executed by the one or more processors individually or collectively, may cause the electronic device to, based on the event, determine a priority of each of the plurality of external electronic devices.

According to an embodiment of the disclosure, the instructions, when executed by the one or more processors individually or collectively, may cause the electronic device to, based on the priority of each of the plurality of external electronic devices, transmit, via the communication circuitry, a second signal including at least a portion of the information related to the plurality of external electronic devices and information related to the electronic device.

According to an embodiment of the disclosure, the event may include at least one of an event of receiving, from another external electronic device (101; 108; 230) via the communication circuitry, a third signal requesting to transmit the information related to the plurality of external electronic devices, or an event for switching to an operation mode for transmitting at least the portion of the information related to the plurality of external electronic devices and the information related to the electronic device.

According to an embodiment of the disclosure, the instructions, when executed by the one or more processors individually or collectively, may cause the electronic device to, based on the priority of each of the plurality of external electronic devices, determine at least one external electronic device whose related information is to be included in the second signal among the plurality of external electronic devices.

According to an embodiment of the disclosure, the instructions, when executed by the one or more processors individually or collectively, may cause the electronic device to transmit, via the communication circuitry, the second signal including at least a portion of information related to the at least one external electronic device and the information related to the electronic device.

According to an embodiment of the disclosure, the instructions, when executed by the one or more processors individually or collectively, may cause the electronic device to determine the priority of each of the plurality of external electronic devices based on a set condition.

According to an embodiment of the disclosure, the set condition may include at least one of a first condition based on places at which the plurality of external electronic devices are located, a second condition based on time zones during which the plurality of external electronic devices are used, a third condition based on device categories of the plurality of external electronic devices, or a fourth condition based on a user input for the plurality of external electronic devices.

According to an embodiment of the disclosure, at least the portion of the information related to the plurality of external electronic devices may include device types of the plurality of external electronic devices.

According to an embodiment of the disclosure, an electronic device (102; 104; 220) may comprise communication circuitry (302), one or more processors (304) including processing circuitry, and memory (306) storing instructions.

According to an embodiment of the disclosure, the instructions, when executed by the one or more processors individually or collectively, may cause the electronic device to identify an event which triggers transmission of first information for at least one external electronic device (101) to control at least one other external electronic device (102; 104; 220).

According to an embodiment of the disclosure, the instructions, when executed by the one or more processors individually or collectively, may cause the electronic device to, based on the event, transmit, via the communication circuitry, a first signal including the first information and second information related to the electronic device.

According to an embodiment of the disclosure, the event may include at least one of an event of receiving, via the communication circuitry from a server (108; 230), a second signal requesting transmission of the first information, or an event of switching to an operation mode for transmitting the first information and the second information.

According to an embodiment of the disclosure, the first information may include at least one of third information indicating that it is possible for the at least one external electronic device to control the at least one other external electronic device, or fourth information indicating whether permission for controlling the at least one other external electronic device is required.

According to an embodiment of the disclosure, based on the fourth information indicating that the permission is not required, the first information may further include fifth information related to authentication for the at least one other external electronic device.

According to an embodiment of the disclosure, the first information may include at least one of a uniform resource locator (URL) of a website associated with an application for the at least one external electronic device to control the at least one other external electronic device, or information related to authentication for the at least one other external electronic device.

According to an embodiment of the disclosure, an electronic device (101) may comprise communication circuitry (190), one or more processors (120) including processing circuitry, a display (160), and memory (130) storing instructions.

According to an embodiment of the disclosure, the instructions, when executed by the one or more processors individually or collectively, may cause the electronic device to receive, via the communication circuitry from an external electronic device (102; 104; 220), a first signal including third information which is at least a portion of first information related to the external electronic device and second information related to a plurality of other external electronic devices (102; 104; 220).

According to an embodiment of the disclosure, the instructions, when executed by the one or more processors individually or collectively, may cause the electronic device to, based on reception of the first signal, output, via the display, a screen related to the first information and the third information, or perform a control operation for the external electronic device and the plurality of other external electronic devices based on the first information and the third information.

According to an embodiment of the disclosure, the first signal may be received if an event triggering transmission of the third information is identified by the external electronic device.

According to an embodiment of the disclosure, the event may include at least one of an event that the external electronic device receives, from the electronic device or a server (108; 230), a second signal requesting to transmit the information related to the plurality of other external electronic devices, or an event that the external electronic device switches to an operation mode for transmitting the third information and the first information.

According to an embodiment of the disclosure, a priority for each of the plurality of other external electronic devices may be determined based on a set condition, and based on the priority, at least one other external electronic device whose related information is to be included in the first signal may be determined among the plurality of other external electronic devices.

According to an embodiment of the disclosure, the set condition may include at least one of a first condition based on places at which the plurality of other external electronic devices are located, a second condition based on time zones during which the plurality of other external electronic devices are used, a third condition based on device categories of the plurality of other external electronic devices, or a fourth condition based on a user input for the plurality of other external electronic devices.

According to an embodiment of the disclosure, an electronic device (101) may comprise communication circuitry (190), one or more processors (120) including processing circuitry, a display (160), and memory (130) storing instructions.

According to an embodiment of the disclosure, the instructions, when executed by the one or more processors individually or collectively, may cause the electronic device to receive, via the communication circuitry from at least one external electronic device (102; 104; 220), a first signal including first information related to the at least one external electronic device and second information used for the electronic device to control at least one other external electronic device (102; 104; 220).

According to an embodiment of the disclosure, the instructions, when executed by the one or more processors individually or collectively, may cause the electronic device to, based on reception of the first signal, output, via the display, a screen related to the first information and the second information, or perform a control operation for the at least one external electronic device and the at least one other external electronic device based on the first information and the second information.

According to an embodiment of the disclosure, the first signal may be received if an event which triggers transmission of the second information is identified by the at least one external electronic device.

According to an embodiment of the disclosure, the event may include at least one of an event that the at least one external electronic device receives, from a server (108; 230), a second signal requesting to transmit of the second information, or an event that the at least one external electronic device switches to an operation mode for transmitting the first information and the second information.

According to an embodiment of the disclosure, the second information may include at least one of third information indicating that it is possible for the electronic device to control the at least one other external electronic device, or fourth information indicating whether permission for controlling the at least one other external electronic device is required.

According to an embodiment of the disclosure, the second information may include at least one of a uniform resource locator (URL) of a website associated with an application for the electronic device to control the at least one other external electronic device, or information related to authentication for the at least one other external electronic device.

According to an embodiment of the disclosure, the second information may further include information related to authentication for the at least one other external electronic device if the fourth information indicates that the permission is not required.

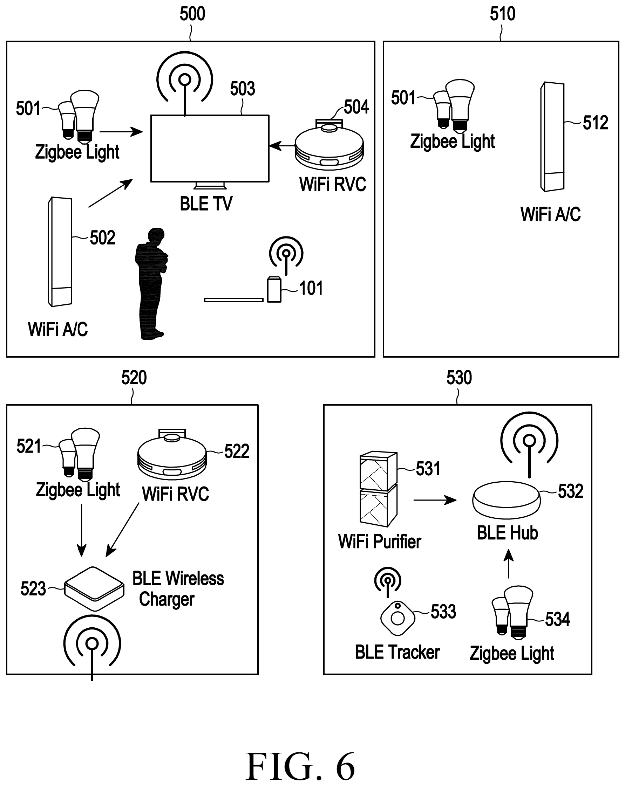

FIG. 6 is a diagram for describing a scheme of informing presence of an adjacent external electronic device in an IoT-based service according to an embodiment.

Referring to FIG. 6, a set space in which a smart home service (e.g., Samsung^{™} SmartThings service), which is a service based on an IoT technology, is provided may include various spaces, and the various spaces may include a first space 500, a second space 510, a third space 520, and/or a fourth space 530. In FIG. 6, it will be assumed that a plurality of external electronic devices may exist in the set space, and N (e.g., 13) external electronic devices among the plurality of external electronic devices support a short-range communication scheme. The first space 500, the second space 510, the third space 520, and/or the fourth space 530 may be implemented to be similar to or substantially the same as a first space 500, a second space 510, a third space 520, and/or a fourth space 530 described in FIG. 5, so a detailed description thereof will be omitted herein. The N external electronic devices may include a first external electronic device 501 (e.g., a first external electronic device 501 in FIG. 5) to an eleventh external electronic device 532 (e.g., an eleventh external electronic device 532 in FIG. 5), and the first external electronic device 501 to the eleventh external electronic device 532 may be implemented to be similar to or substantially the same as the first external electronic device 501 to the eleventh external electronic device 532 described in FIG. 5, so a detailed description thereof will be omitted herein.

In an embodiment of the disclosure, if the set space in which the smart home service (e.g., Samsung^{™} SmartThings service), which is the service based on the IoT technology, is provided includes at least one space, an electronic device for selecting a specific external electronic device among external electronic devices existing in each of the at least one space as a representative external electronic device, and causing the representative external electronic device to transmit not only information related to the representative external electronic device but also information related to the remaining external electronic devices, and an operating method thereof may be provided. In an embodiment, among external electronic devices existing in the same space, the remaining external electronic devices related to the representative external electronic device will be referred to as "associated external electronic devices."

In FIG. 6, an electronic device 101 (e.g., an electronic device 101 in FIG. 1, 2, 3, or 5), a first external electronic device 501, a second external electronic device 502, a third external electronic device 503, and/or a fourth external electronic device 504 may exist in the first space 500. The third external electronic device 503 may operate as a representative external electronic device for the remaining external electronic devices (e.g., the first external electronic device 501, the second external electronic device 502, and/or the fourth external electronic device 504) existing in the first space 500.

A fifth external electronic device 511 and/or a sixth external electronic device 512 may exist in the second space 510. In the second space 510, a representative external electronic device may not exist.

A seventh external electronic device 521, an eighth external electronic device 522, and/or a ninth external electronic device 523 may exist in the third space 520. The ninth external electronic device 523 may operate as a representative external electronic device for the remaining external electronic devices (e.g., the seventh external electronic device 521 and/or the eighth external electronic device 522) existing in the third space 520.

A tenth external electronic device 531, an eleventh external electronic device 532, a twelfth external electronic device 533, and/or a thirteenth external electronic device 534 may exist in the fourth space 530. The eleventh external electronic device 532 may operate as a representative external electronic device for the remaining external electronic devices (e.g., the tenth external electronic device 531, the twelfth external electronic device 533, and/or the thirteenth external electronic device 534) existing in the fourth space 530.

In an embodiment, a criterion for selecting a representative external electronic device among external electronic devices related to the smart home service may be set based on various schemes, and for example, the representative external electronic device may be selected based on a user input. In an embodiment, the representative external electronic device may transmit information related to the representative external electronic device itself and information related to at least one external electronic device (e.g., at least one associated external electronic device) related to the representative external electronic device. In an embodiment, the at least one associated external electronic device may include at least one external electronic device existing in the same space as the representative external electronic device.

The representative external electronic device may receive information related to each of the at least one associated external electronic device from each of the at least one associated external electronic device. The representative external electronic device, which receives the information related to each of the at least one associated external electronic device from each of the at least one associated external electronic device, may transmit (for example, broadcast) a packet including information related to the representative external electronic device and the received information related to each of the at least one associated external electronic device.

Alternatively, the representative external electronic device may receive the information related to each of the at least one associated external electronic device from a server (e.g., a server 108 in FIG. 1 or a server 230 in FIG. 2 or 4). The representative external electronic device, which receives the information related to each of the at least one associated external electronic device from the server, may transmit (for example, broadcast) a packet including the information related to the representative external electronic device and the received information related to each of the at least one associated external electronic device.

In an embodiment, information related to an associated external electronic device may include priority information, time information, device information, and/or invitation information.

In an embodiment, when receiving the information related to the at least one associated external electronic device, the representative external electronic device may adjust a frequency (or a period) of transmitting a packet which includes the information related to the at least one associated external electronic device, based on the information related to the representative external electronic device and a priority of each of the at least one associated external electronic device. For convenience of a description, a packet transmitted from the representative external electronic device and including information related to an associated external electronic device will be referred to as an "associated advertising packet." A packet including the information related to the representative external electronic device may be an advertising packet.

In an embodiment, the invitation information may include at least one of an invitation code used for controlling an associated external electronic device, permission packet information (an invitation type), an invitation link, an invitation uniform resource locator (URL), and/or device authentication information.

In an embodiment, the information related to the associated external electronic device may include status information of the associated external electronic device.

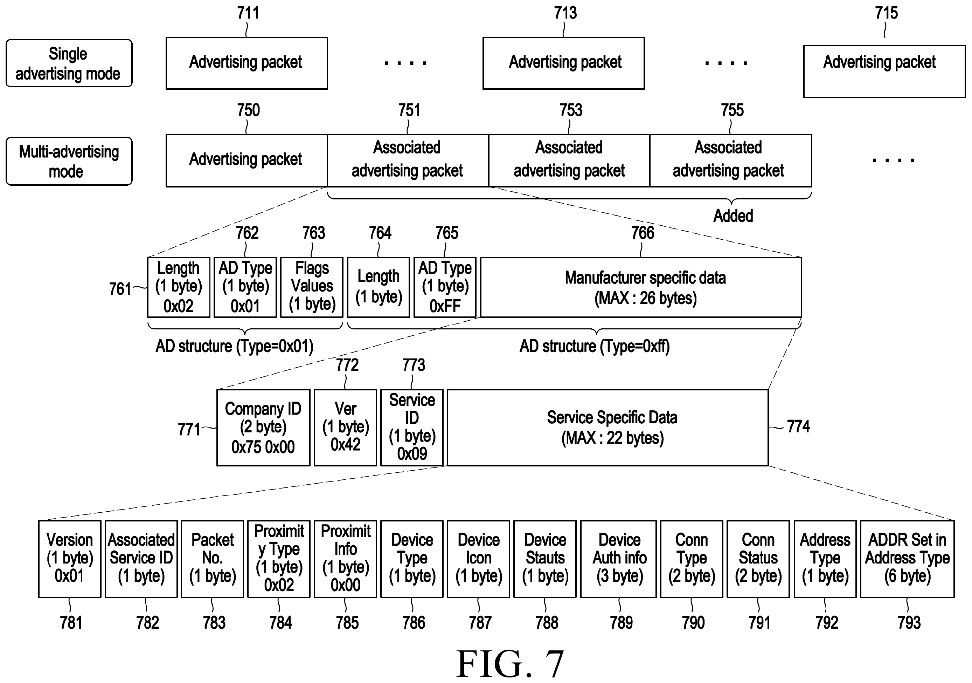

FIG. 7 is a diagram for describing an operation of transmitting an advertising packet and an associated advertising packet, according to an embodiment.

Referring to FIG. 7, an external electronic device (e.g., an electronic device 102 or an electronic device 104 in FIG. 1, an external electronic device(s) 220 in FIG. 2, or an external electronic device 220 in FIG. 3) may periodically transmit an advertising packet based on a set period. The advertising packet may include information related to the external electronic device. For example, if the external electronic device does not operate as a representative external electronic device (e.g., the electronic device 102 or the electronic device 104 in FIG. 1, or the external electronic device(s) 220 in FIG. 2, or external electronic device 220 in FIG. 3), the external electronic device may periodically transmit (for example, broadcast) advertising packets 711, 713, 715. A set period in which the advertising packets 711, 713, 715 are transmitted may be variable as needed.

Alternatively, if the external electronic device operates as the representative external electronic device, the representative external electronic device may receive information related to each of at least one associated external electronic device from each of the at least one associated external electronic device and transmit (for example, broadcast) the received information related to each of the at least one associated external electronic device. The representative external electronic device may receive the information related to each of the at least one associated external electronic device from a server (e.g., a server 108 in FIG. 1 or a server 230 in FIG. 2 or 4). The representative external electronic device, which receives the information related to each of the at least one associated external electronic device from the server, may transmit (for example, may broadcast) a packet including information related to the representative external electronic device and the received information related to each of the at least one associated external electronic device.

The information related to each of the at least one associated external electronic device may be transmitted via an associated advertising packet. In an embodiment, immediately after transmitting the advertising packet 750 based on a set period, the representative external electronic device may transmit associated advertising packets 751, 753, 755 including the information related to each of the at least one associated external electronic device. In FIG. 7, it will be assumed that the representative external electronic device is a third external electronic device (e.g., a third external electronic device 503 in FIG. 5 or 6) located in a first space (e.g., a first space 500 in FIG. 5 or 6), and that the at least one associated external electronic device includes the remaining external electronic devices (e.g., a first external electronic device 501, a second external electronic device 502, and/or a fourth external electronic device 504) located in the first space. So, the associated advertising packet 751 may include information related to the first external electronic device, the associated advertising packet 753 may include information related to the second external electronic device, and the associated advertising packet 755 may include information related to the fourth external electronic device.

In an embodiment, a format of an associated advertising packet will be described below with reference to the associated advertising packet 751.

The associated advertising packet 751 may include a length field 761, an AD type field 762, a flag value field 763, a length field 764, an AD type field 765, and/or a manufacturer specific data field 766. Each of the flag value field 763 and the manufacturer specific data field 766 may be an advertising data (AD) data field.

In an embodiment, the length field 761 may be implemented with, for example, 1 byte, and may include length information of the flag value field 763, which is the AD data field. The AD type field 762 may be implemented with, for example, 1 byte, and may include type information of data included in the flag value field 763. The flag value field 763 may be implemented with, for example, 1 byte, and may include information indicating an advertising mode. In an embodiment, the advertising mode may include a single advertising mode and a multi-advertising mode. The single advertising mode may indicate a mode for advertising information related to one device (e.g., an electronic device or an external electronic device). The multi-advertising mode may indicate a mode for advertising information related to a plurality of devices (e.g., a representative external electronic device and at least one associated external electronic device).

In an embodiment, the length field 764 may be implemented with, for example, 1 byte, and may include length information of the manufacturer specific data field 766, which is the AD data field. The AD type field 765 may be implemented with, for example, 1 byte, and may include type information of data included in the manufacturer specific data field 766.

In an embodiment, the manufacturer specific data field 766 may be implemented with, for example, a maximum of 26 bytes, and may include manufacturer specific data for a first external electronic device. The manufacturer specific data field 766 may include a company ID field 771, a version field 772, a service ID field 773, and/or a service specific data field 774.

In an embodiment, the company ID field 771 may be implemented with, for example, 2 bytes, and may include vendor information for the first external electronic device.

In an embodiment, the version field 772 may be implemented with, for example, 1 byte, and may include version information.

In an embodiment, the service ID field 773 may be implemented with, for example, 1 byte, and may include service identification information.

In an embodiment, the service specific data field 774 may be implemented with, for example, a maximum of 22 bytes, and may include service specific data for the first external electronic device. The service specific data field 774 may include a version field 781, an associated service ID field 782, a packet number field 783, a proximity type field 784, a proximity information field 785, a device type field 786, a device icon field 787, a device status field 788, a device authentication information field 789, a connection type field 790, a connection status field 791, an address type field 792, and/or an address field 793.

In an embodiment, the version field 781 may be implemented with, for example, 1 byte, and may include version information.

In an embodiment, the associated service ID field 782 may be implemented with, for example, 1 byte, and may include an ID of an associated service.

In an embodiment, the packet number field 783 may be implemented with, for example, 1 byte, and may include a number of a packet.

In an embodiment, the proximity type field 784 may be implemented with, for example, 1 byte, and may include a proximity type.

In an embodiment, the proximity information field 785 may be implemented with, for example, 1 byte, and may include proximity information.

In an embodiment, the device type field 786 may be implemented with, for example, 1 byte, and may include a device type.

In an embodiment, the device icon field 787 may be implemented with, for example, 1 byte, and may include information related to a device icon.

In an embodiment, the device status field 788 may be implemented with, for example, 1 byte, and may include information related to device status.

In an embodiment, the device authentication information field 789 may be implemented with, for example, 3 bytes, and may include device authentication information.

In an embodiment, the connection type field 790 may be implemented with, for example, 2 bytes, and may include a connection type.

In an embodiment, the connection status field 791 may be implemented with, for example, 2 bytes, and may include a connection type.

In an embodiment, the address type field 792 may be implemented with, for example, 1 byte, and may include an address type.

In an embodiment, the address field 793 may be implemented with, for example, 6 bytes, and may include an address.

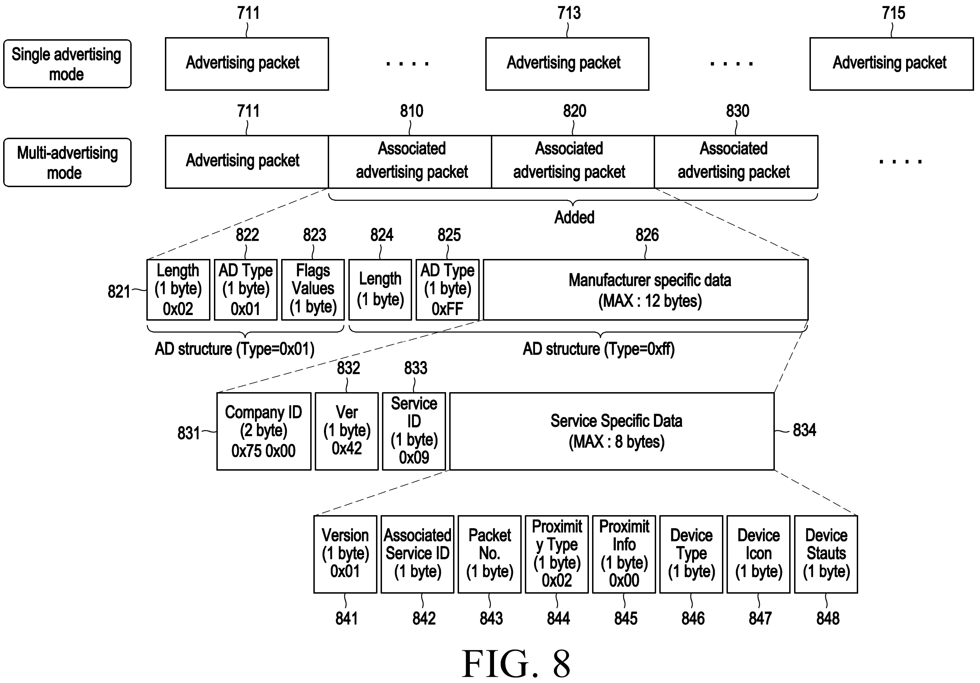

FIG. 8 is a diagram for describing an operation of transmitting an advertising packet and an associated advertising packet according to an embodiment.

Referring to FIG. 8, an external electronic device (e.g., an electronic device 102 or an electronic device 104 in FIG. 1, an external electronic device(s) 220 in FIG. 2, or an external electronic device 220 in FIG. 3) may periodically transmit an advertising packet based on a set period. The advertising packet may include information related to the external electronic device. For example, if the external electronic device does not operate as a representative external electronic device (e.g., the electronic device 102 or the electronic device 104 in FIG. 1, or the external electronic device(s) 220 in FIG. 2, or external electronic device 220 in FIG. 3), the external electronic device may periodically transmit (for example, broadcast) advertising packets 711, 713, 715. A set period in which the advertising packets 711, 713, 715 are transmitted may be variable as needed.

Alternatively, if the external electronic device operates as the representative external electronic device, the representative external electronic device may receive information related to each of at least one associated external electronic device from each of the at least one associated external electronic device and transmit (for example, broadcast) the received information related to each of the at least one associated external electronic device. The representative external electronic device may receive the information related to each of the at least one associated external electronic device from a server (e.g., a server 108 in FIG. 1 or a server 230 in FIG. 2 or 4). The representative external electronic device, which receives the information related to each of the at least one associated external electronic device from the server, may transmit (for example, may broadcast) a packet including information related to the representative external electronic device and the received information related to each of the at least one associated external electronic device.

The received information related to each of the at least one associated external electronic device may be transmitted via an associated advertising packet. In an embodiment, immediately after transmitting the advertising packet 711 based on a set period, the representative external electronic device may transmit associated advertising packets 810, 820, 830 including the information related to each of the at least one associated external electronic device. In FIG. 7, it will be assumed that the representative external electronic device is a third external electronic device (e.g., a third external electronic device 503 in FIG. 5 or 6) located in a first space (e.g., a first space 500 in FIG. 5 or 6), and that the at least one associated external electronic device includes the remaining external electronic devices (e.g., a first external electronic device 501, a second external electronic device 502, and/or a fourth external electronic device 504) located in the first space. So, the associated advertising packet 810 may include information related to the first external electronic device, the associated advertising packet 820 may include information related to the second external electronic device, and the associated advertising packet 830 may include information related to the fourth external electronic device.

In an embodiment, a format of an associated advertising packet will be described below with reference to the associated advertising packet 810.

The associated advertising packet 810 may include a length field 821, an AD type field 822, a flag value field 823, a length field 824, an AD type field 825, and/or a manufacturer specific data field 826. Each of the flag value field 823 and the manufacturer specific data field 826 may be an AD data field. The length field 821, the AD type field 8222, the flag value field 823, the length field 824, and/or the AD type field 825 may be implemented to be similar to or substantially the same as a length field 761, an AD type field 762, a flag value field 763, a length field 764, and/or an AD type field 765 described in FIG. 7, so a detailed description thereof will be omitted herein.

In an embodiment, the manufacturer specific data field 826 may be implemented with, for example, a maximum of 12 bytes, and may include manufacturer specific data for a first external electronic device. The manufacturer specific data field 826 described in FIG. 8 may include simplified manufacturer specific data compared to a manufacturer specific data included in the manufacturer specific data field 766 described in FIG. 7, so it may increase transmission and reception efficiency compared to the manufacturer specific data field 766.

The manufacturer specific data field 826 may include a company ID field 831, a version field 832, a service ID field 833, and/or a service specific data field 834.

In an embodiment, the company ID field 831 may be implemented with, for example, 2 bytes, and may include vendor information for the first external electronic device.

In an embodiment, the version field 832 may be implemented with, for example, 1 byte, and may include version information.

In an embodiment, the service ID field 833 may be implemented with, for example, 1 byte, and may include service identification information.

In an embodiment, the service specific data field 834 may be implemented with, for example, a maximum of 8 bytes, and may include service specific data for the first external electronic device. The service specific data field 834 may include a version field 841, an associated service ID field 842, a packet number field 843, a proximity type field 844, a proximity information field 845, a device type field 846, a device icon field 847, and/or a device status field 848. The version field 841, the associated service ID field 842, the packet number field 843, the proximity type field 844, the proximity information field 845, the device type field 846, the device icon field 847, and/or the device status field 848 may be implemented to be similar to or substantially the same as a version field 781, an associated service ID field 782, a packet number field 783, a proximity type field 784, a proximity information field 785, a device type field 786, a device icon field 787, and/or a device status field 788 described in FIG. 7, so a detailed description thereof will be omitted herein.

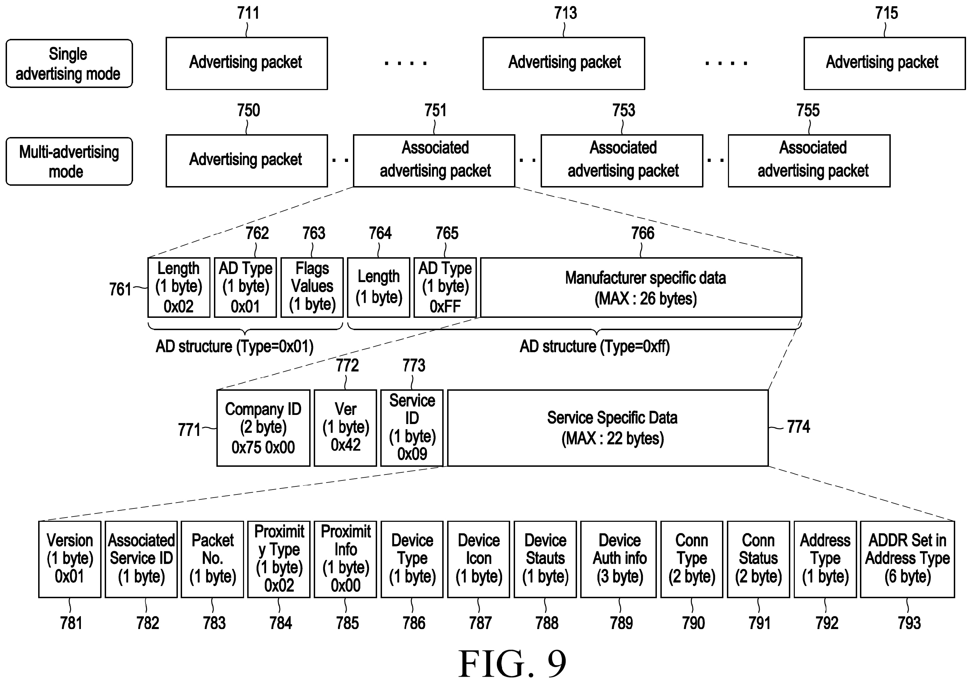

FIG. 9 is a diagram for describing an operation of transmitting an advertising packet and an associated advertising packet according to an embodiment.

Referring to FIG. 9, an external electronic device (e.g., an electronic device 102 or an electronic device 104 in FIG. 1, an external electronic device(s) 220 in FIG. 2, or an external electronic device 220 in FIG. 3) may periodically transmit an advertising packet based on a set period. The advertising packet may include information related to the external electronic device. For example, if the external electronic device does not operate as a representative external electronic device (e.g., the electronic device 102 or the electronic device 104 in FIG. 1, or the external electronic device(s) 220 in FIG. 2, or external electronic device 220 in FIG. 3), the external electronic device may periodically transmit (for example, broadcast) advertising packets 711, 713, 715. A set period in which the advertising packets 711, 713, 715 are transmitted may be variable as needed.

Alternatively, if the external electronic device operates as the representative external electronic device, the representative external electronic device may receive information related to each of at least one associated external electronic device from each of the at least one associated external electronic device and transmit (for example, broadcast) the received information related to each of the at least one associated external electronic device. The representative external electronic device may receive the information related to each of the at least one associated external electronic device from a server (e.g., a server 108 in FIG. 1 or a server 230 in FIG. 2 or 4). The representative external electronic device, which receives the information related to each of the at least one associated external electronic device from the server, may transmit (for example, may broadcast) a packet including information related to the representative external electronic device and the received information related to each of the at least one associated external electronic device.

The received information related to each of the at least one associated external electronic device may be transmitted via an associated advertising packet. In an embodiment, after transmitting the advertising packet 750 based on a set period, the representative external electronic device may transmit associated advertising packets 751, 753, 755 including the information related to each of the at least one associated external electronic device. In FIG. 9, it will be assumed that the representative external electronic device is a third external electronic device (e.g., a third external electronic device 503 in FIG. 5 or 6) located in a first space (e.g., a first space 500 in FIG. 5 or 6), and that the at least one associated external electronic device includes the remaining external electronic devices (e.g., a first external electronic device 501, a second external electronic device 502, and/or a fourth external electronic device 504) located in the first space. So, the associated advertising packet 751 may include information related to the first external electronic device, the associated advertising packet 753 may include information related to the second external electronic device, and the associated advertising packet 755 may include information related to the fourth external electronic device.

In an embodiment, a format of an associated advertising packet will be described below with reference to the associated advertising packet 751.

The associated advertising packet 751 may include a length field 761, an AD type field 762, a flag value field 763, a length field 764, an AD type field 765, and/or a manufacturer specific data field 766. The length field 761, the AD type field 762, the flag value field 763, the length field 764, the AD type field 765, and/or the manufacturer specific data field 766 may be implemented to be similar to or substantially the same as a length field 761, an AD type field 762, a flag value field 763, a length field 764, an AD type field 765, and/or a manufacturer specific data field 766 described in FIG. 7, so a detailed description thereof will be omitted herein. However, while the associates advertising packet 751 in FIG. 7 is transmitted immediately after the advertising packet 750 is transmitted, the associated advertising packet 751 in FIG. 9 may be transmitted after the advertising packet 750 is transmitted based on a set period. In FIG. 9, an advertising packet and an associated advertising packet may be sequentially transmitted based on a set period used by a third external electronic device, which is a representative external electronic device, to transmit the advertising packet. In this case, neighbor external electronic devices may operate similarly to a case where an advertising packet is individually transmitted from each of the first external electronic device, a second external electronic device, a third external electronic device, and a fourth external electronic device.

In an embodiment, if the representative external electronic device transmits an advertising packet and an associated advertising packets based on a set period for transmitting the advertising packet of the representative external electronic device, the representative external electronic device may consider priorities for associated advertising packets.

In an embodiment, if a plurality of associated external electronic devices for the representative external electronic device exist, the representative external electronic device may determine a priority for each of the plurality of associated external electronic devices, and may transmit associated advertising packets of the plurality of associated external electronic devices based on the determined priorities. For example, it will be assumed that the third external electronic device is the representative external electronic device, a plurality of associated external electronic devices including the first external electronic device, the second external electronic device, and the fourth external electronic device exist, a priority of the first external electronic device is higher than a priority of the second external electronic device, and a priority of the second external electronic device is higher than a priority of the fourth external electronic device. For example, based on the set period, an advertising packet of the third external electronic device may be transmitted, after which an associated advertising packet corresponding to the first external electronic device may be transmitted, after which an associated advertising packet corresponding to the second external electronic device may be transmitted, and after which an associated advertising packet corresponding to the fourth external electronic device may be transmitted. Based on this order, an advertising packet and associated advertising packets may be periodically transmitted.

In the above, a case has been described that based on the set period, the advertising packet of the third external electronic device is transmitted, and then the associated advertising packet corresponding to the first external electronic device is transmitted, the associated advertising packet corresponding to the second external electronic device is transmitted, and the associated advertising packet corresponding to the fourth external electronic device is transmitted, however, based on the set period, the advertising packet of the third external electronic device may be transmitted, and then, associated advertising packets corresponding to some of the first external electronic device, the second external electronic device, and the fourth external electronic device may be transmitted based on a priority.

In an embodiment, a priority used for transmitting associated advertising packets may be determined based on the following parameters.
(1) Priority set by a user
(2) Priority determined by a server (e.g., a server 108 in FIG. 1 or a server 230 in FIG. 2 or 4)

The server may determine a priority of an external electronic device based on a device category of the external electronic device.

(3) Priority based on the number of times a control operation by a user is performed

A priority of an external electronic device may be determined based on the number of times the user has performed control on the external electronic device.

(4) Priority based on an environment of an IoT network (e.g., a smart home network) in which a smart home service is provided

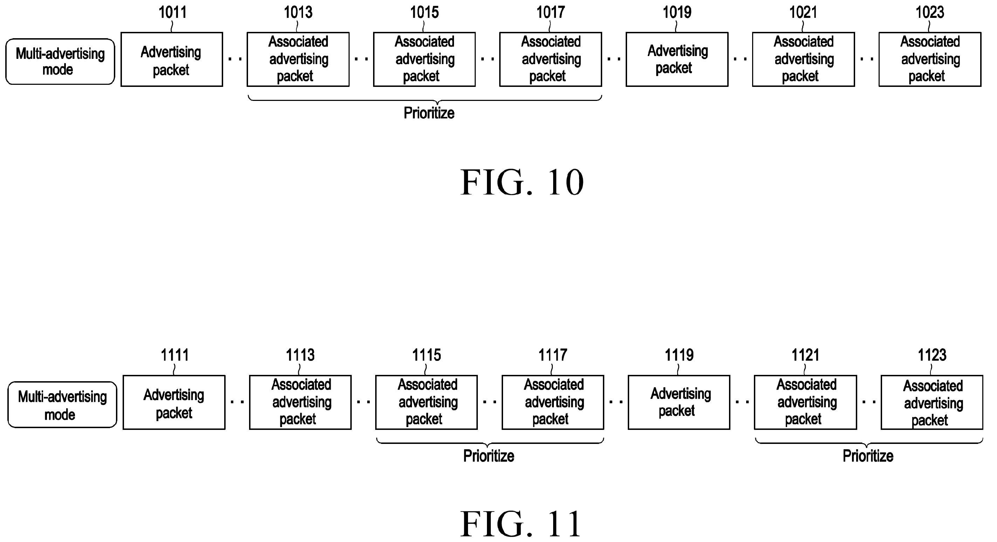

For example, if an external temperature or an indoor temperature is greater than or equal to a set temperature, a priority for an AC may be higher, and such an example is illustrated in FIG. 10.

FIG. 10 is a diagram for describing an operation of transmitting an advertising packet and an associated advertising packet according to an embodiment.

Referring to FIG. 10, it will be assumed that a representative external electronic device is a third external electronic device (e.g., a third external electronic device 503 in FIG. 5 or 6) located in a first space (e.g., a first space 500 in FIG. 5 or 6), and at least one associated external electronic device includes the remaining external electronic devices (e.g., a first external electronic device 501, a second external electronic device 502, and/or a fourth external electronic device 504) located in the first space.

In FIG. 10, it will be assumed that a priority for transmitting an associated advertising packet is determined based on an environment (e.g., an indoor temperature) of an IoT network (e.g., a smart home network) where a smart home service is provided. If the priority is determined based on the indoor temperature, a priority of an external electronic device (e.g., an AC) which operates based on the indoor temperature among external electronic devices related to the smart home service may be set higher than those of other external electronic devices.

If the indoor temperature is higher than or equal to a set temperature (e.g., 28°C), based on a set period, an advertising packet 1011 of the third external electronic device may be transmitted, and then associated advertising packets 1013, 1015, 1017 corresponding to the second external electronic device, which is an AC, may be transmitted, an advertising packet 1019 of the third external electronic device may be transmitted, an associated advertising packet 1021 corresponding to the fourth external electronic device may be transmitted, and an associated advertising packet 1023 corresponding to the first external electronic device may be transmitted.

For another example, if a time period is after a set time period, a priority for a light may be higher, and such an example is illustrated in FIG. 11.

FIG. 11 is a diagram for describing an operation of transmitting an advertising packet and an associated advertising packet according to an embodiment.

Referring to FIG. 11, it will be assumed that a representative external electronic device is a third external electronic device (e.g., a third external electronic device 503 in FIG. 5 or 6) located in a first space (e.g., a first space 500 in FIG. 5 or 6), and at least one associated external electronic device includes the remaining external electronic devices (e.g., a first external electronic device 501, a second external electronic device 502, and/or a fourth external electronic device 504) located in the first space.

In FIG. 11, it will be assumed that a priority for transmitting an associated advertising packet is determined based on an environment (e.g., a time period) of an IoT network (e.g., a smart home network) where a smart home service is provided. If the priority is determined based on the time period, a priority of an external electronic device (e.g., a light) which operates based on the time period among external electronic devices related to the smart home service may be set higher than those of other external electronic devices.

If the time period is a set time period (e.g., a nighttime period) (e.g., 8:00 PM to 6:00 AM), based on a set period, an advertising packet 1111 of the third external electronic device may be transmitted, and then an associated advertising packet 1113 corresponding to the second external electronic device, which is an AC, may be transmitted, associated advertising packets 1115, 1117 corresponding to the first external electronic device, which is a light, may be transmitted, an advertising packet 1119 of the third external electronic device may be transmitted, and associated advertising packets 1121, 1123 corresponding to the first external electronic device, which is the light, may be transmitted. While a case in which an advertising packet 1019 of the third external electronic device is transmitted, an associated advertising packet 1021 corresponding to a fourth external electronic device, which is an RVC, is transmitted, and an associated advertising packet 1023 corresponding to the first external electronic device, which is the light, is transmitted has been described in FIG. 10, however, if the fourth external electronic device is temporarily (or permanently) not present in the first space as in FIG. 11, the associated advertising packet 1121 corresponding to the first external electronic device having a high priority may be transmitted instead of an associated advertising packet corresponding to the fourth external electronic device.

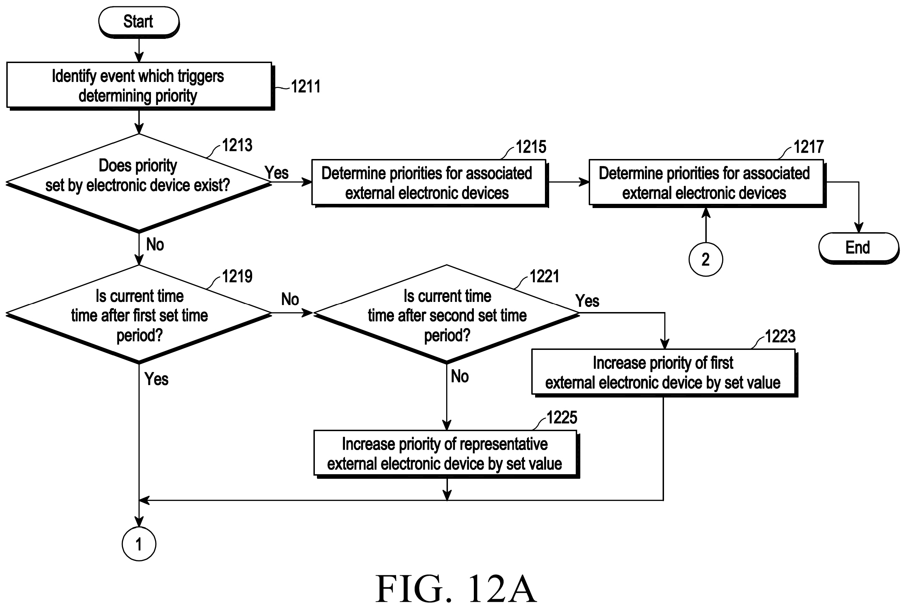

FIG. 12A is a flowchart illustrating a process of determining a priority used for transmitting an associated advertising packet according to an embodiment.

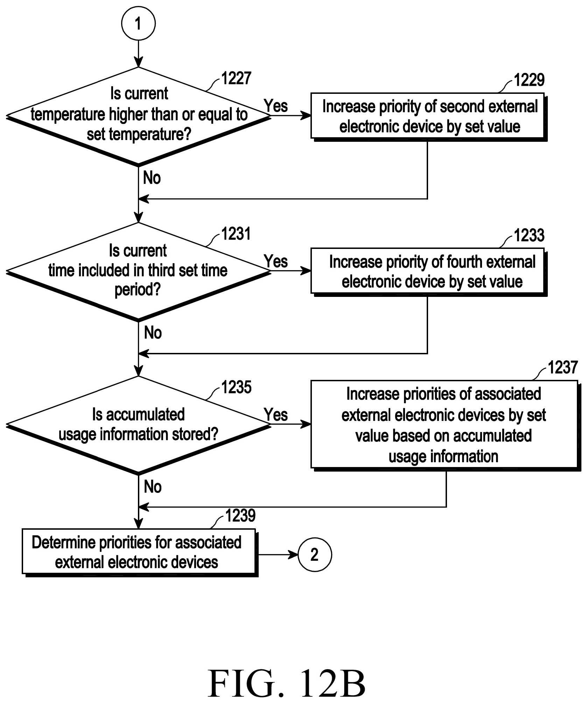

FIG. 12B is a flowchart illustrating a process of determining a priority used for transmitting an associated advertising packet according to an embodiment.

Referring to FIGS. 12A and 12B, a representative external electronic device (e.g., an electronic device 102 or 104 in FIG. 1, an external electronic device(s) 220 in FIG. 2, or an external electronic device 220 in FIG. 3) (e.g., a processor 304 in FIG. 3) may identify an event which triggers determining priorities for associated external electronic devices (e.g., the electronic device 102 or 104 in FIG. 1, the external electronic device(s) 220 in FIG. 2, or the external electronic device 220 in FIG. 3) in operation 1211. In an embodiment, the event which triggers determining the priorities for the associated external electronic devices may include at least one of an event in which a signal for requesting to transmit information related to the associated external electronic devices is received from an electronic device (e.g., an electronic device 101 in FIG. 1 or 2) or a server (e.g., a server 108 in FIG. 1, or a server 230 in FIG. 2 or 4), and/or an event in which an operation mode of the representative associated external electronic device is switched to a multi-advertising mode. In FIGS. 12A and 12B, it will be assumed that a representative external electronic device is a third external electronic device (e.g., a third external electronic device 503 in FIG. 5 or 6) located in a first space (e.g., a first space 500 in FIG. 5 or 6), and at least one associated external electronic device includes the remaining external electronic devices (e.g., a first external electronic device 501, a second external electronic device 502, and/or a fourth external electronic device 504) located in the first space. The first external electronic device 501 may be a light supporting a Zigbee scheme, the second external electronic device 502 may be an AC supporting a Wi-Fi scheme, the third external electronic device 503 may be a TV supporting a BLE scheme, and the fourth external electronic device 504 may be an RVC supporting the Wi-Fi scheme.

The electronic device, which identifies the event which triggers determining the priorities for the associated external electronic devices may identify, in operation 1213, whether a priority set by the electronic device (e.g., the electronic device 101 in FIG. 1 or 2) exists. In an embodiment, the electronic device may be a device which manages a smart home service.

If the priority set by the electronic device exists (Operation 1213-Yes), the representative external electronic device may determine, in operation 1215, priorities for the associated external electronic devices based on the priority set by the electronic device. The external electronic device, which determines the priorities for the associated external electronic devices, may determine, in operation 1217, priorities for an advertising packet and associated advertising packets based on the determined priorities for the associated external electronic devices.

If the priority set by the electronic device does not exist (Operation 1213-NO), the representative external electronic device may determine the priorities for the associated external electronic devices based on an environment of an IoT network (e.g., a smart home network) in which a smart home service is provided. In operation 1219, the electronic device may identify whether current time is time after a first set time period (e.g., a sunset time period) (e.g., 5:00 PM to 7:00 PM). If the current time is the time after the first set time period (Operation 1219-YES), in operation 1221, the representative external electronic device may identify whether the current time is included in a second set time period (e.g., a nighttime period) (e.g., 7:00 PM to 5:00 AM). If the current time is included in the second set time period (Operation 1221-YES), in operation 1223, the representative external electronic device may increase a priority for the first external electronic device 501, which is the light, by a set value (e.g., 1).

If the current time is not included in the second set time period (Operation 1221-NO), in operation 1225, the representative external electronic device may increase a priority for the representative external electronic device itself, which is the TV, by the set value (e.g., 1).

If the current time is time before the first set time period (Operation 1219-NO), in operation 1227, the representative external electronic device may identify whether a current temperature is higher than or equal to a set temperature (e.g., 28°C). If the current temperature is higher than or equal to the set temperature (Operation 1227-YES), in operation 1229, the representative external electronic device may increase a priority for the second external electronic device 502, which is the AC, by the set value (e.g., 1).

If the current temperature is lower than the set temperature (Operation 1227-NO), in operation 1231, the representative external electronic device may identify whether the current time is included in a third set time period (e.g., a time period excluding the first set time period and the second set time period). If the current time is included in the third set time period (Operation 1231-YES), in operation 1233, the representative external electronic device may increase a priority of the fourth external electronic device, which is the RVC, by the set value (e.g., 1).

If the current time is not included in the third set time period (Operation 1231-NO), in operation 1235, the representative external electronic device may identify whether accumulated usage information related to the number of times a control operation has been performed by the electronic device (e.g., the electronic device 101 in FIG. 1 or 2) is stored for the associated external electronic devices. If the accumulated usage information related to the number of times the control operation has been performed by a user is stored for the associated external electronic devices (Operation 1235-YES), in operation 1237, for the associated external electronic devices, the representative external electronic device may increase a priority for the associated external electronic devices by the set value (e.g., 1) based on the accumulated usage information (e.g., based on the number of times the control operation has been performed by the electronic device).

If the accumulated usage information is not stored for the associated external electronic devices (Operation 1235-NO), in operation 1239, the representative external electronic device may determine priorities for the associated external electronic devices based on preset priorities and proceed to operation 1217.

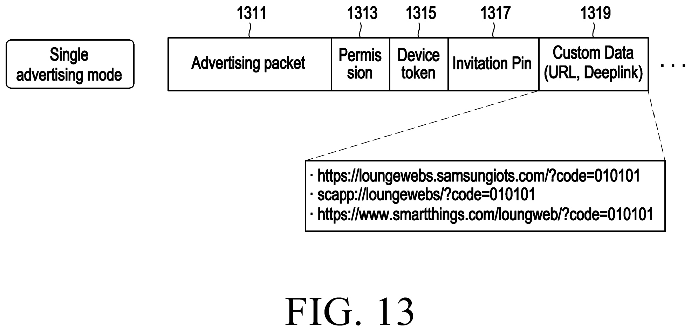

FIG. 13 is a diagram for describing transmission of an advertising packet and an invitation code according to an embodiment.

Referring to FIG. 13, an external electronic device (e.g., an electronic device 102 or an electronic device 104 in FIG. 1, an external electronic device(s) 220 in FIG. 2, or an external electronic device 220 in FIG. 3) may periodically transmit an advertising packet based on a set period. The advertising packet may include only information related to the external electronic device. For example, if the external electronic device does not operate as a representative external electronic device (e.g., the electronic device 102 or the electronic device 104 in FIG. 1, or the external electronic device(s) 220 in FIG. 2, or external electronic device 220 in FIG. 3), the external electronic device may periodically transmit (for example, broadcast) an advertising packet 1311. A set period in which the advertising packet 1311 is transmitted may be variable as needed.

Immediately after transmitting the advertising packet 1311, the external electronic device may include a permission field 1313, a device token field 1315, an invitation code field 1317, and/or an invitation web page field 1319. A description of the permission field 1313, the device token field 1315, the invitation code field 1317, and/or the invitation web page field 1319 is as follows.

In an embodiment, the invitation code field 1317 may include an invitation code (or invitation information) indicating that it is possible to be controlled by a user other than a user of an electronic device (e.g., an electronic device 101 in FIG. 1 or 2) (e.g., a manager device (e.g., a smartphone)) which manages a smart home service, for example, another user who intends to use the smart home service. In an embodiment, the invitation code may be updated as necessary, and validity of the invitation code may be checked. In an embodiment, the invitation code field 1317 may include not only the invitation code but also a list including information about other external electronic devices capable of controlling the external electronic device. As such, if the invitation code field 1317 includes the list, even if another external electronic device receives the invitation code field 1317, if information about the other external electronic device itself is not included in the list, the other external electronic device may not unnecessarily attempt to control the external electronic device. In an embodiment, the list may include at least one of the following.
(1) At least one device token
(2) At least one hashed e-mail address
(3) At least one hashed phone number
(4) At least one hashed device identification address
(5) At least one hashed device identification code

In an embodiment, the permission field 1313 may include information indicating whether permission for controlling the external electronic device is required. In an embodiment, if the information indicating whether the permission for controlling the external electronic device is required is set to a first value (e.g., allow by owner), it may indicate that permission from an owner of the external electronic device is required if the other user intends to control the external electronic device. In an embodiment, if the information indicating whether the permission for controlling the external electronic device is required is set to a second value (e.g., control only), it may indicate that the permission from the owner of the external electronic device (e.g., the user of the electronic device) is not required if the other user intends to control the external electronic device. In an embodiment, if the information indicating whether the permission for controlling the external electronic device is required is set to the second value, the other user may add and control the external electronic device as the other user's own external electronic device without permission from the owner of the external electronic device. In an embodiment, as the information indicating whether the permission for controlling the external electronic device is required is provided via the permission field 1313, a manual invitation procedure between the other user's electronic device and the user's electronic device may be omitted, so the other user may use the external electronic device without a separate invitation procedure, and this may consequently increase convenience of the smart home service.

In an embodiment, the device token field 1315 may include a device token which is authentication information used for controlling the external electronic device. If the information indicating whether the permission for controlling the external electronic device is required, which is included in the permission field 1313, is set to the second value, the other user's electronic device may control the external electronic device via a server (e.g., a server 108 in FIG. 1 or a server 230 in FIG. 2) based on the device token included in the device token field 1315 without a separate invitation procedure.

In an embodiment, the invitation web page field 1319 may include an invitation link associated with an application (e.g., a smart home application (e.g., Samsung^{™} SmartThings application)) capable of controlling the external electronic device. In an embodiment, the invitation link associated with the application capable of controlling the external electronic device may include a uniform resource locator (URL) of a website associated with the application capable of controlling the external electronic device. A case in which the URL of the website associated with the application capable of controlling the external electronic device is implemented as, for example, "https://loungewebs.samsungiots.com/?code=010101", "scapp://loungewebs/?code=010101", "https://www.smarthings.com/ loungewebs/?code=010101" is illustrated in FIG. 13. Although FIG. 13 describes a case in which the invitation web page field 1319 is implemented with the invitation link as an example, it may be implemented with custom data of various formats as well as the invitation link. The other external electronic device, which receives the invitation web page field 1319, may inquire, via a UI, of the user (e.g., the other user) of the other external electronic device as to whether to move to a corresponding invitation link, and when identifying a user input requesting to move to the corresponding invitation link, may move to the corresponding invitation link to allow the other user to control the external electronic device using the smart home service.

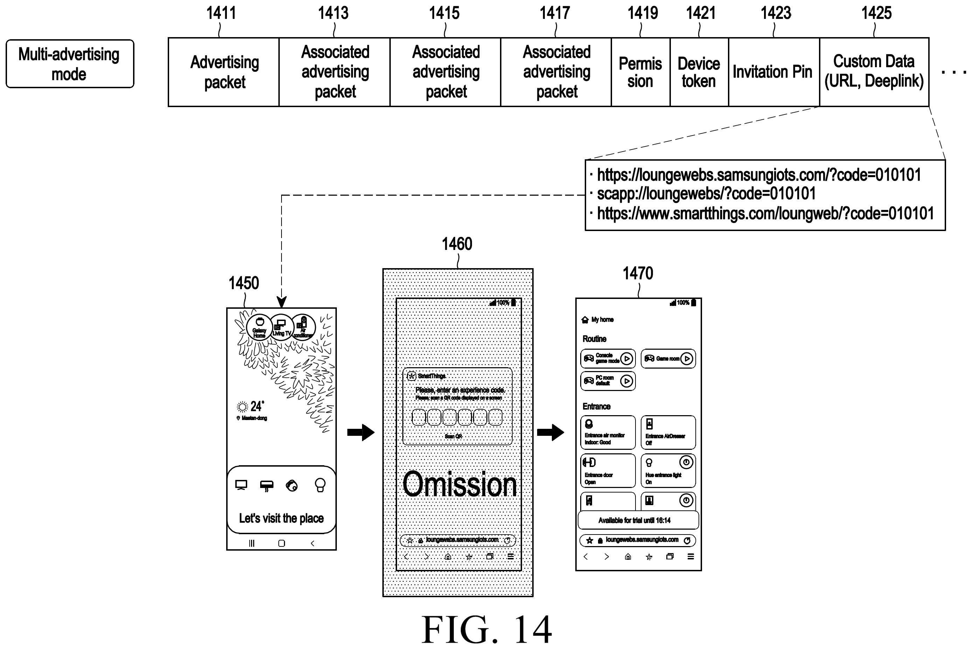

FIG. 14 is a diagram for describing transmission of an advertising packet, an associated advertising packet, and an invitation code according to an embodiment.

Referring to FIG. 14, if an external electronic device (e.g., an electronic device 102 or an electronic device 104 in FIG. 1, an external electronic device(s) 220 in FIG. 2, or an external electronic device 220 in FIG. 3) operates as a representative external electronic device (e.g., the electronic device 102 or the electronic device 104 in FIG. 1, the external electronic device(s) 220 in FIG. 2, or the external electronic device 220 in FIG. 3), the representative external electronic device may receive information related to each of at least one associated external electronic device from each of the at least one associated external electronic device and transmit (for example, broadcast) the received information related to each of the at least one associated external electronic device. The received information related to each of the at least one associated external electronic device may be transmitted via an associated advertising packet. In an embodiment, immediately after transmitting the advertising packet 1411 based on a set period, the representative external electronic device may transmit associated advertising packets 1413, 1415, 1417 including the information related to each of the at least one associated external electronic device. In FIG. 14, it will be assumed that the representative external electronic device is a third external electronic device (e.g., a third external electronic device 503 in FIG. 5 or 6) located in a first space (e.g., a first space 500 in FIG. 5 or 6), and that the at least one associated external electronic device includes the remaining external electronic devices (e.g., a first external electronic device 501, a second external electronic device 502, and/or a fourth external electronic device 504) located in the first space. So, the associated advertising packet 1413 may include information related to the first external electronic device, the associated advertising packet 1415 may include information related to the second external electronic device, and the associated advertising packet 1417 may include information related to the fourth external electronic device.

The representative external electronic device may include a permission field 1419, a device token field 1421, an invitation code field 1423, and/or an invitation web page field 1425 immediately after transmitting an associated advertising packet 1417. The permission field 1419, the device token field 1421, the invitation code field 1423, and/or the invitation web page field 1425 may be implemented to be similar to or substantially the same as a permission field 1313, a device token field 1315, an invitation code field 1317, and/or an invitation web page field 1319 described in FIG. 13, respectively, so a detailed description thereof will be omitted herein.

A case in which the URL, which is included in the invitation web page field 1425, of the website associated with the application capable of controlling the representative external electronic device is implemented as, for example, "https://loungewebs.samsungiots.com/?code=010101", "scapp://loungewebs/?code=010101", "https://www.smarthings.com/ loungewebs/?code=010101" is illustrated in FIG. 14. The other external electronic device, which receives the invitation web page field 1425, may inquire, via a UI, of the user (e.g., the other user) of the other external electronic device as to whether to move to a corresponding invitation link, and when identifying a user input requesting to move to the corresponding invitation link, may move to the corresponding invitation link to allow the other user to control the representative external electronic device using the smart home service.

For example, if the user input requesting to move to the corresponding invitation link is identified from the other user, screens 1450, 1460, 1470 for controlling the representative external electronic device using the smart home service may be outputted via a UI on the other external electronic device.

In an embodiment, the representative external electronic device may update status information for each of associated external electronic devices as well as the representative external electronic device itself. In an embodiment, the representative external electronic device may receive the status information for each of the associated external electronic devices as well as the representative external electronic device itself from a server (e.g., a server 108 in FIG. 1 or a server 230 in FIG. 2). The representative external electronic device, which receives the status information for each of the associated external electronic devices as well as the representative external electronic device itself from the server, may include the status information for the representative external electronic device itself in an advertising packet and include the status information for each of the associated external electronic devices in an associated advertising packet, in real time or periodically. As such, by the representative external electronic device updating the status information for the representative external electronic device itself and the associated external electronic devices in real time or periodically, other external electronic devices, which receive the advertising packet and the associated advertising packets, may accurately identify the updated status information and display the updated status information on a UI for controlling the representative external electronic device and the associated external electronic devices.

In an embodiment, a scheme in which associated external electronic devices are selected is described as follows.

In an embodiment, a representative external electronic device may select an associated external electronic device based on a user input. For example, the representative external electronic device may identify a user input for selecting associated external electronic devices which intend to transmit an associated advertising packet via the representative external electronic device (for example, intend to transmit related information via the representative external electronic device). The user input for selecting the associated external electronic devices may be described as follows.
(1) The user input may include a product category of an external electronic device desired to be selected as an associated external electronic device. A kind of the external electronic device may include, for example, an AC product and a lighting product. As such, if the user input includes the product category of the external electronic device desired to be selected as the associated external electronic device, the representative external electronic device may select, as associated external electronic devices, external electronic devices corresponding to the product category existing in a space associated with the representative external electronic device.
(2) The user input may include information related to the external electronic device desired to be selected as the associated external electronic device. As such, if the user input includes the information related to the external electronic device desired to be selected as the associated external electronic device, the representative external electronic device may select an external electronic device corresponding to the information as the associated external electronic device.

In an embodiment, the representative external electronic device may be selected based on a user input. In an embodiment, the representative external electronic device may be selected based on a user input of an electronic device (e.g., a manager device (e.g., a smartphone)) managing a smart home service.

In an embodiment, the representative external electronic device may determine time to transmit an associated advertising packet based on a user input. For example, the user input may include information for setting a start date for starting transmission of the associated advertising packet to January 1, 2024, and setting an end date for ending the transmission of the associated advertising packet to December 3, 2024. For example, the user input may set start time for starting the transmission of the associated advertising packet to 08:00, and set end time for ending the transmission of the associated advertising packet to 20:00.

In an embodiment, the external electronic device may set invitation authority for the external electronic device based on a user input. If the user input includes information indicating not to permit an invitation for the external electronic device, the external electronic device may not permit the invitation for the external electronic device. If the user input includes information indicating to permit the invitation for the external electronic device, the external electronic device may permit the invitation for the external electronic device. The information indicating to permit the invitation for the external electronic device may include information indicating whether permission from an owner of the external electronic device is required. If the information indicating whether the permission from the owner of the external electronic device is required indicates that the permission from the owner of the external electronic device is not required, another external electronic device may control the external electronic device without a separate invitation procedure.

In an embodiment, based on a user input, an invitation for external electronic devices existing in a specific space among various spaces included in a set space corresponding to the smart home service may be permitted.

In an embodiment, based on a user input, an invitation for external electronic devices existing in a set space corresponding to the smart home service may be permitted. In this case, another external electronic device, for which an invitation for the external electronic devices existing in the set space corresponding to the smart home service is permitted, may control the external electronic devices existing in the set space without a separate invitation procedure.

In an embodiment, the representative external electronic device may transmit setting information to a server, and the setting information is as follows.
(1) User information of the representative external electronic device
(2) Device information of the representative external electronic device
(3) Device information of associated external electronic devices
(4) Product category for associated external electronic devices
(5) Information about time for transmitting an associated advertising packet

For example, the information about the time for transmitting the associated advertising packet may include a date for starting transmission of the associated advertising packet, a date for ending the transmission of the associated advertising packet, time for starting the transmission of the associated advertising packet, and/or time for ending the transmission of the associated advertising packet.

### (6) Invitation permission information

In an embodiment, a server, which receives the setting information from the representative external electronic device, may identify additionally required data based on the received setting information, and may transmit the identified additional data to the representative external electronic device. In an embodiment, the server may finally determine associated external devices for the representative external electronic device based on an owner and an environment of the representative external electronic device and the associated external electronic devices, and may transmit information about the finally determined external electronic devices to the representative external electronic device.

In an embodiment, the information about the finally determined external electronic devices may include a device type, a device icon, and a priority for associated external electronic devices.

In an embodiment, the information about the finally determined external electronic devices may include additional data defined by a manufacturer/user of the associated external electronic devices.

In an embodiment, the server may transmit information about a transmission type for transmitting an associated advertising packet to the representative external electronic device. In an embodiment, the transmission type for transmitting the associated advertising packet may include a first transmission type, a second transmission type, and/or a third transmission type. For example, as described in FIG. 7, the first transmission type may be a type of transmitting an advertising packet of the associated external electronic device as it is as an associated advertising packet immediately after transmitting an advertising packet of the representative external electronic device. For example, as described in FIG. 8, the second transmission type may be a type of transmitting a packet including only some of fields included in the advertising packet of the associated external electronic device as an associated advertising packet immediately after transmitting the advertising packet of the representative external electronic device. For example, as described in FIG. 9, the third transmission type may be a type of waiting for an interval corresponding to a set period after transmitting the advertising packet of the representative external electronic device and then transmitting the advertising packet of the associated external electronic device as it is as the associated advertising packet.

In an embodiment, the representative external electronic device may be selected based on a user input of the electronic device (e.g., the manager device (e.g., the smartphone)) which manages the smart home service.

In an embodiment, the representative external electronic device may be selected from among external electronic devices existing in a space corresponding to the smart home service as follows.
(1) If there is one external electronic device capable of performing a transmission function among external electronic devices existing in the space corresponding to the smart home service, the corresponding external electronic device may be selected as the representative external electronic device.
(2) If there are a plurality of external electronic devices capable of performing the transmission function among the external electronic devices existing in the space corresponding to the smart home service, an external electronic device corresponding to a product category selected by a user input of the electronic device (e.g., the manager device (e.g., the smartphone)) which manages the smart home service may be selected as the representative external electronic device.
(3) If there are the plurality of external electronic devices capable of performing the transmission function among the external electronic devices existing in the space corresponding to the smart home service, an external electronic device existing in a space selected by a user input among various spaces corresponding to the smart home service may be selected as the representative external electronic device.
(4) If there are the plurality of external electronic devices capable of performing the transmission function among the external electronic devices existing in the space corresponding to the smart home service, but there is no external electronic device capable of performing the transmission function in the space selected by the user input among the various spaces corresponding to the smart home service, an external electronic device existing in a space associated with the selected space may be selected as the representative external electronic device. In an embodiment, an association relationship among spaces may be preset. For example, as described in FIG. 5 and 6, if a total of four spaces from a first space to a fourth space exist, it may be set such that the first space has an association relationship with the second space, and the third space has an association relationship with the fourth space.

If there are the plurality of external electronic devices capable of performing the transmission function among the external electronic devices existing in the space corresponding to the smart home service, but there is no external electronic device capable of performing the transmission function in the space selected by the user input among the various spaces corresponding to the smart home service or in the space associated with the selected space, an external electronic device existing in another space may be selected as the representative external electronic device.

(5) If there are the plurality of external electronic devices capable of performing the transmission function among the external electronic devices existing in the space corresponding to the smart home service, and the plurality of external electronic devices are distributed across a plurality of spaces, an external electronic device existing in a space where the number of external electronic devices to be included is maximum may be selected as the representative external electronic device.

In an embodiment, the server may transmit setting information to the representative external electronic device, and an associated advertising packet may be transmitted based on the setting information received from the server. In this case, the setting information transmitted from the server is as follows.
(1) User information of the representative external electronic device
(2) Device information of the representative external electronic device
(3) Device information of associated external electronic devices
(4) Product category for the associated external electronic devices
(5) Status information about the associated external electronic devices
(6) On/off information of the associated external electronic devices
(7) Status information according to a device type of the associated external electronic devices
(8) Information about time for transmitting an associated advertising packet

For example, the information about the time for transmitting the associated advertising packet may include a date for starting transmission of the associated advertising packet, a date for ending the transmission of the associated advertising packet, time for starting the transmission of the associated advertising packet, and/or time for ending the transmission of the associated advertising packet.

### (9) Invitation permission information

The invitation permission information may include at least one of an invitation code used for controlling an associated external electronic device, permission packet information (invitation type), an invitation link, an invitation uniform resource locator (URL), and/or device authentication information.

The representative external electronic device may receive the setting information from the server, generate associated advertising packets based on the setting information, and transmit the associated advertising packets based on any one of a first transmission type, a second transmission type, and/or a third transmission type.

According to an embodiment, the electronic device may receive an advertising packet and associated advertising packets transmitted from external electronic devices including the representative external electronic device by performing a scan operation, and may identify external electronic devices close to the electronic device based on the received advertising packet and associated advertising packets. The electronic device may provide a screen for controlling the external electronic devices close to the electronic device via a UI, and may identify a user input for controlling the devices close to the electronic device via the provided screen.

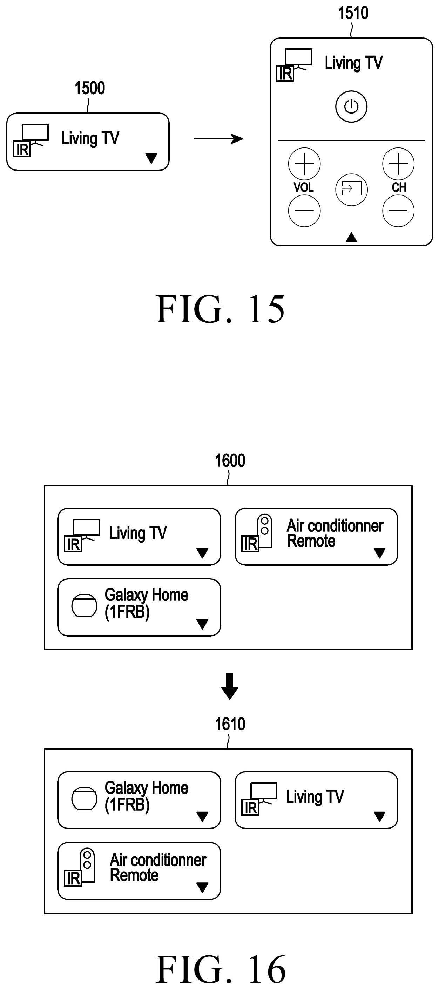

FIG. 15 is a diagram illustrating a screen for controlling close external electronic devices according to an embodiment.

Referring to FIG. 15, an electronic device (e.g., an electronic device 101 in FIG. 1 or 2) may perform a scan operation to receive an advertising packet and associated advertising packets transmitted from external electronic devices (e.g., an electronic device 102 or 104 in FIG. 1, an external electronic device(s) 220 in FIG. 2, or an external electronic device 220 in FIG. 3) including a representative external electronic device (e.g., the electronic device 102 or 104 in FIG. 1, the external electronic device(s) 220 in FIG. 2, or the external electronic device 220 in FIG. 3), and may identify external electronic devices close to the electronic device based on the received advertising packet and associated advertising packets. The electronic device may provide a screen for controlling the external electronic devices close to the electronic device via a UI. A screen 1500 may represent a screen in a form of a simple card for controlling the external electronic devices close to the electronic device at a specific time point, and a screen 1510 may represent a screen in a form of a detailed control card provided when the screen 1500 is touched. In FIG. 15, the screen 1500 represents the screen in the form of the simple card if an external electronic device close to the electronic device is a TV, and the screen 1510 may include icons for controlling the TV.

FIG. 16 is a diagram illustrating a screen for controlling close external electronic devices according to an embodiment.

Referring to FIG. 16, an electronic device (e.g., an electronic device 101 in FIG. 1 or 2) may perform a scan operation to receive an advertising packet and associated advertising packets transmitted from external electronic devices (e.g., an electronic device 102 or 104 in FIG. 1, an external electronic device(s) 220 in FIG. 2, or an external electronic device 220 in FIG. 3) including a representative external electronic device (e.g., the electronic device 102 or 104 in FIG. 1, the external electronic device(s) 220 in FIG. 2, or the external electronic device 220 in FIG. 3), and may identify external electronic devices close to the electronic device based on the received advertising packet and associated advertising packets. The electronic device may provide a screen for controlling the external electronic devices close to the electronic device via a UI. A screen 1600 may represent a screen in a form of a simple card for controlling external electronic devices close to the electronic device at a first time point, and a screen 1610 may represent a screen in the form of the simple card for controlling the external electronic devices close to the electronic device at a second time point after the first time point. In FIG. 16, the screen 1600 and the screen 1610 represent the screens in the form of the simple card if the external electronic devices close to the electronic device are a TV, an AC, and a speaker, and icons are displayed in an order of an icon for controlling the TV, an icon for controlling the AC, and an icon for controlling the speaker in the screen 1600, but the icons may be displayed in an order of the icon for controlling the speaker, the icon for controlling the TV, and the icon for controlling the AC in the screen 1610.

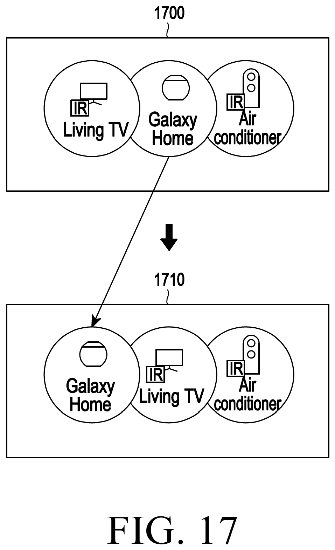

FIG. 17 is a diagram illustrating a screen for controlling close external electronic devices according to an embodiment.

Referring to FIG. 17, an electronic device (e.g., an electronic device 101 in FIG. 1 or 2) may perform a scan operation to receive an advertising packet and associated advertising packets transmitted from external electronic devices (e.g., an electronic device 102 or 104 in FIG. 1, an external electronic device(s) 220 in FIG. 2, or an external electronic device 220 in FIG. 3) including a representative external electronic device (e.g., the electronic device 102 or 104 in FIG. 1, the external electronic device(s) 220 in FIG. 2, or the external electronic device 220 in FIG. 3), and may identify external electronic devices close to the electronic device based on the received advertising packet and associated advertising packets. The electronic device may provide a screen for controlling the external electronic devices close to the electronic device via a UI. A screen 1700 may represent a screen in a form of a simple card for controlling external electronic devices close to the electronic device at a first time point, and a screen 1710 may represent a screen in the form of the simple card for controlling the external electronic devices close to the electronic device at a second time point after the first time point. In FIG. 17, the screen 1700 and the screen 1710 represent the screens in the form of the simple card if the external electronic devices close to the electronic device are a TV, a speaker, and an AC, and icons are displayed in an order of an icon for controlling the TV, an icon for controlling the speaker, and an icon for controlling the AC in the screen 1700, but the icons may be displayed in an order of the icon for controlling the speaker, the icon for controlling the TV, and the icon for controlling the AC in the screen 1710.

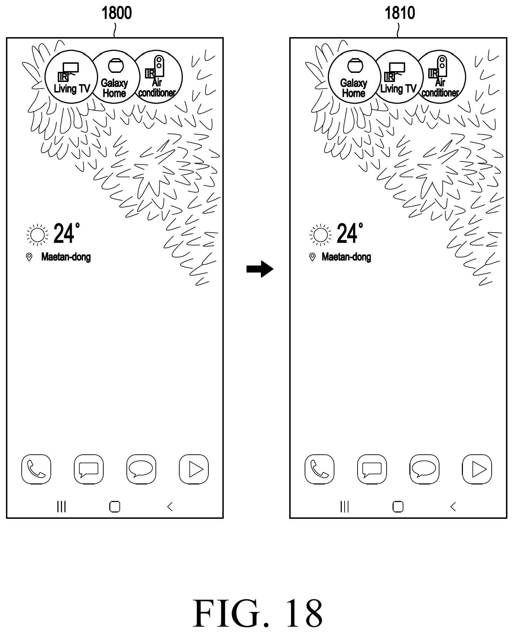

FIG. 18 is a diagram illustrating a screen for controlling close external electronic devices according to an embodiment.

Referring to FIG. 18, an electronic device (e.g., an electronic device 101 in FIG. 1 or 2) may perform a scan operation to receive an advertising packet and associated advertising packets transmitted from external electronic devices (e.g., an electronic device 102 or 104 in FIG. 1, an external electronic device(s) 220 in FIG. 2, or an external electronic device 220 in FIG. 3) including a representative external electronic device (e.g., the electronic device 102 or 104 in FIG. 1, the external electronic device(s) 220 in FIG. 2, or the external electronic device 220 in FIG. 3), and may identify external electronic devices close to the electronic device based on the received advertising packet and associated advertising packets. The electronic device may provide a screen for controlling the external electronic devices close to the electronic device via a UI. A screen 1800 may represent a screen in a form of a simple card for controlling external electronic devices close to the electronic device at a first time point, and a screen 1810 may represent a screen in the form of the simple card for controlling the external electronic devices close to the electronic device at a second time point after the first time point. In FIG. 18, the screen 1800 and the screen 1810 represent the screens in the form of the simple card if the external electronic devices close to the electronic device are a TV, a speaker, and an AC, and icons are displayed in an order of an icon for controlling the TV, an icon for controlling the speaker, and an icon for controlling the AC in the screen 1800, but the icons may be displayed in an order of the icon for controlling the speaker, the icon for controlling the TV, and the icon for controlling the AC in the screen 1810.

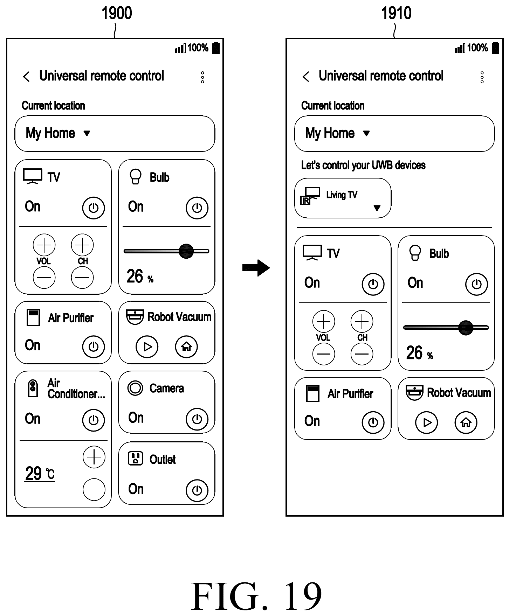

FIG. 19 is a diagram illustrating a screen for controlling close external electronic devices according to an embodiment.

Referring to FIG. 19, an electronic device (e.g., an electronic device 101 in FIG. 1 or 2) may perform a scan operation to receive an advertising packet and associated advertising packets transmitted from external electronic devices (e.g., an electronic device 102 or 104 in FIG. 1, an external electronic device(s) 220 in FIG. 2, or an external electronic device 220 in FIG. 3) including a representative external electronic device (e.g., the electronic device 102 or 104 in FIG. 1, the external electronic device(s) 220 in FIG. 2, or the external electronic device 220 in FIG. 3), and may identify external electronic devices close to the electronic device based on the received advertising packet and associated advertising packets. The electronic device may provide a screen for controlling the external electronic devices close to the electronic device via a UI. A screen 1900 may represent a screen for controlling external electronic devices close to the electronic device at a first time point, and a screen 1910 may represent a screen for controlling the external electronic devices close to the electronic device at a second time point after the first time point. In FIG. 19, the screen 1900 may represent a screen in a case that the electronic device controls a TV, a light, an air purifier, an RVC, an AC, a camera, and a smart plug, and a screen 1910 may represent a screen in a case that an external electronic device close to the electronic device is a new TV. The screen 1910 may represent a screen in a case that the electronic device controls the TV, the light, the air purifier, and the RVC, and the new TV approaches the electronic device.

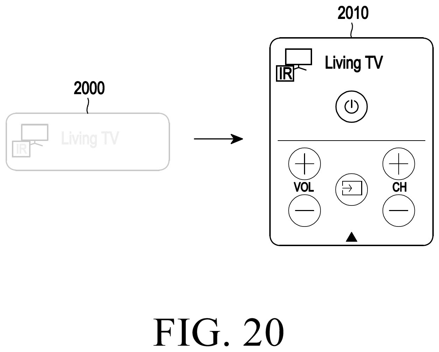

FIG. 20 is a diagram illustrating a screen for controlling close external electronic devices according to an embodiment.

Referring to FIG. 20, an electronic device (e.g., an electronic device 101 in FIG. 1 or 2) may perform a scan operation to receive an advertising packet, and at least one of a permission field (e.g., a permission field 1313 in FIG. 13), a device token field (e.g., a device token field 1315 in FIG. 13), an invitation code field (e.g., an invitation code field 1317 in FIG. 13), or an invitation web page field (e.g., an invitation web page field 1319 in FIG. 13) transmitted from an external electronic device (e.g., an electronic device 102 or 104 in FIG. 1, an external electronic device(s) 220 in FIG. 2, or an external electronic device 220 in FIG. 3), and may identify external electronic devices close to the electronic device based on the received advertising packet and at least one of the permission field, the device token field, the invitation code field, or the invitation web page field.

The electronic device may provide a screen for controlling an external electronic device close to the electronic device via a UI. The electronic device may identify whether permission for controlling the external electronic device is required based on the permission field, and if information indicating whether the permission for controlling the external electronic device is required is set to a first value (e.g., allow by owner), the electronic device may provide the screen for controlling the external electronic device via the UI. A screen 2000 may represent a screen in a form of a simple card for controlling external electronic devices close to the electronic device at a specific time point, and since the information indicating whether the permission for controlling the external electronic device is required is set to the first value, the screen 2000 may be provided in a transparent form.

The electronic device may inquire, via a server (e.g., a server 108 in FIG. 1 or a server 230 in FIG. 2 or 4), of the external electronic device as to whether the external electronic device permits the electronic device to control the external electronic device. In an embodiment, the electronic device may transmit, via the server, a message inquiring whether control of the external electronic device is permitted. If the external electronic device permits that the external electronic device is controlled by the electronic device, the electronic device may identify, via the server, that the external electronic device permits that the external electronic device is controlled by the electronic device, and in this case, a screen 2010 in a form of a detailed control card may be displayed. Since the electronic device identifies that the external electronic device permits that the external electronic device is controlled by the electronic device, the screen 2010 may be provided in a general form (e.g., an opaque form) rather than a transparent form like the screen 2000. In FIG. 20, the screen 2000 represents a screen in the form of the simple card if the external electronic device close to the electronic device is a TV, and the screen 2010 may include icons for controlling the TV.

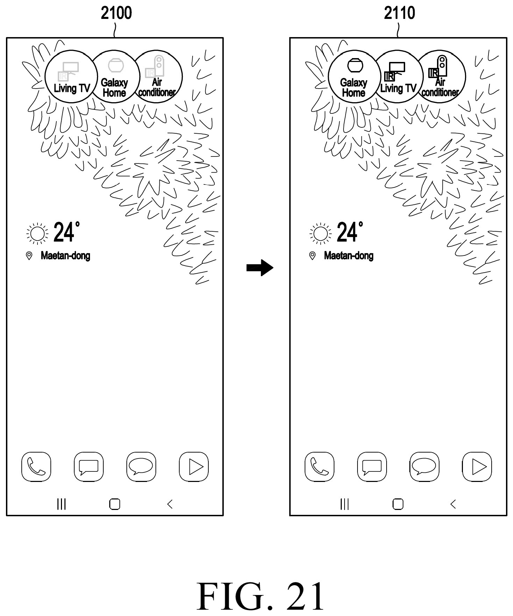

FIG. 21 is a diagram illustrating a screen for controlling close external electronic devices according to an embodiment.

Referring to FIG. 21, an electronic device (e.g., an electronic device 101 in FIG. 1 or 2) may perform a scan operation to receive an advertising packet, and at least one of a permission field (e.g., a permission field 1313 in FIG. 13), a device token field (e.g., a device token field 1315 in FIG. 13), an invitation code field (e.g., an invitation code field 1317 in FIG. 13), or an invitation web page field (e.g., an invitation web page field 1319 in FIG. 13) transmitted from an external electronic device (e.g., an electronic device 102 or 104 in FIG. 1, an external electronic device(s) 220 in FIG. 2, or an external electronic device 220 in FIG. 3), and may identify external electronic devices close to the electronic device based on the received advertising packet and at least one of the permission field, the device token field, the invitation code field, or the invitation web page field.

The electronic device may provide a screen for controlling an external electronic device close to the electronic device via a UI. The electronic device may identify whether permission for controlling the external electronic device is required based on the permission field, and if information indicating whether the permission for controlling the external electronic device is required is set to a first value (e.g., allow by owner), the electronic device may provide the screen for controlling the external electronic device via the UI. A screen 2100 may represent a screen in a form of a simple card for controlling external electronic devices close to the electronic device at a specific time point, and since the information indicating whether the permission for controlling the external electronic device is required is set to the first value, the screen 2100 may be provided in a transparent form.

The electronic device may inquire, via a server (e.g., a server 108 in FIG. 1 or a server 230 in FIG. 2 or 4), of the external electronic device as to whether the external electronic device permits the electronic device to control the external electronic device. In an embodiment, the electronic device may transmit, via the server, a message inquiring whether control of the external electronic device is permitted. If the external electronic device permits that the external electronic device is controlled by the electronic device, the electronic device may identify, via the server, that the external electronic device permits that the external electronic device is controlled by the electronic device, and in this case, a screen 2110 in a form of a detailed control card may be displayed. Since the electronic device identifies that the external electronic device permits that the external electronic device is controlled by the electronic device, the screen 2110 may be provided in a general form (e.g., an opaque form) rather than a transparent form like the screen 2100. In FIG. 21, the screen 2100 and the screen 2110 may represent screens in the form of the simple card if the external electronic devices close to the electronic device are a TV, a speaker, and an AC. The screen 2100 may be a screen before the external electronic device permits that the external electronic device is controlled by the electronic device, and the screen 2110 may be a screen after the external electronic device permits that the external electronic device is controlled by the electronic device.

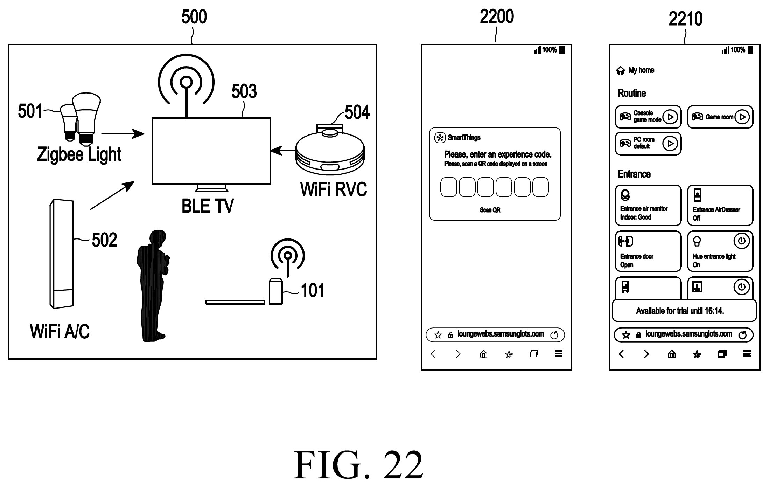

FIG. 22 is a diagram illustrating a screen for controlling close external electronic devices according to an embodiment.

Referring to FIG. 22, an electronic device 101 (e.g., an electronic device 101 in FIG. 1 or 2) may perform a scan operation to receive an advertising packet, and at least one of a permission field (e.g., a permission field 1313 in FIG. 13), a device token field (e.g., a device token field 1315 in FIG. 13), an invitation code field (e.g., an invitation code field 1317 in FIG. 13), or an invitation web page field (e.g., an invitation web page field 1319 in FIG. 13) transmitted from an external electronic device (e.g., an electronic device 102 or 104 in FIG. 1, an external electronic device(s) 220 in FIG. 2, or an external electronic device 220 in FIG. 3), and may identify external electronic devices close to the electronic device based on the received advertising packet and at least one of the permission field, the device token field, the invitation code field, or the invitation web page field. In FIG. 22, it will be assumed that the electronic device 101 and four external electronic devices (e.g., a first external electronic device 501, a second external electronic device 502, a third external electronic device 503, and/or a fourth external electronic device 504) exist in a first space 500 (e.g., a first space 500 in FIG. 5 or 6), and the third external electronic device 503 operates as a representative external electronic device.

The electronic device 101 may provide a screen for controlling an external electronic device close to the electronic device 101 via a UI. The electronic device may provide a screen 2200 for outputting an invitation link (e.g., a URL) for controlling the external electronic device based on an invitation web page field. The electronic device may accept an invitation to a smart home service via the invitation link based on a user input, and in this case, a screen 2210 for controlling the external electronic device may be provided via the UI. In an embodiment, the electronic device may accept an invitation after identifying the safety of the invitation link included in the invitation web page field. In an embodiment, the electronic device may identify the safety of the invitation link via a server (e.g., a server 108 in FIG. 1 or a server 230 in FIG. 2 or 4) or via the smart home service.

Alternatively, the external electronic device may transmit at least one of a permission field, a device token field, an invitation code field, or an invitation web page field only if devices which are required to be invited are detected. For example, while transmitting an advertising packet based on a set period, the external electronic device may transmit the at least one of the permission field, the device token field, the invitation code field, or the invitation web page field immediately after transmitting the advertising packet only when identifying that it is required to invite the electronic device 101. In this case, a situation in which the permission field, the device token field, the invitation code field, and the invitation web page field are unnecessarily transmitted even if there is no device to invite may be prevented.

In an embodiment, the external electronic device may generate an invitation packet including the at least one of the permission field, the device token field, the invitation code field, or the invitation web page field. In an embodiment, the invitation packet may further include a summary field indicating summary information for a smart home network to be invited. In an embodiment, the summary field may include simplified information about external electronic devices existing in the smart home network to be invited (e.g., information about the number and device types of the external electronic devices existing in the smart home network to be invited). In this case, the electronic device, which receives the invitation packet, may identify how many external electronic devices exist in the smart home network to be invited and which device types of external electronic devices may be controlled, so the electronic device may obtain information about the smart home network to be invited before accepting invitation to the smart home service via the invitation link.

In an embodiment, the simplified information about the external electronic devices existing in the smart home network to be invited, which is included in the summary field, may further include information related to authority given to the external electronic devices existing in the smart home network to be invited. In this case, the electronic device, which receives the invitation packet, may not only identify how many external electronic devices exist in the smart home network to be invited and which device types of external electronic devices may be controlled, but also identify the information related to the authority given to the external electronic devices existing in the smart home network to be invited, so the electronic device may obtain the information about the smart home network to be invited before accepting the invitation to the smart home service via the invitation link. Consequently, the simplified information may assist the electronic device in determining whether to accept an invitation request based on the invitation packet, and the electronic device may not need to unnecessarily perform an invitation request based on the simplified information.

In an embodiment, when receiving an invitation packet including an invitation code identical to a preset invitation code from an external electronic device, the electronic device may automatically accept invitation to a corresponding smart home network, or may indicate acceptance of the invitation to the corresponding smart home network by automatically transmitting, to the external electronic device, a message requesting the invitation to the corresponding smart home network.

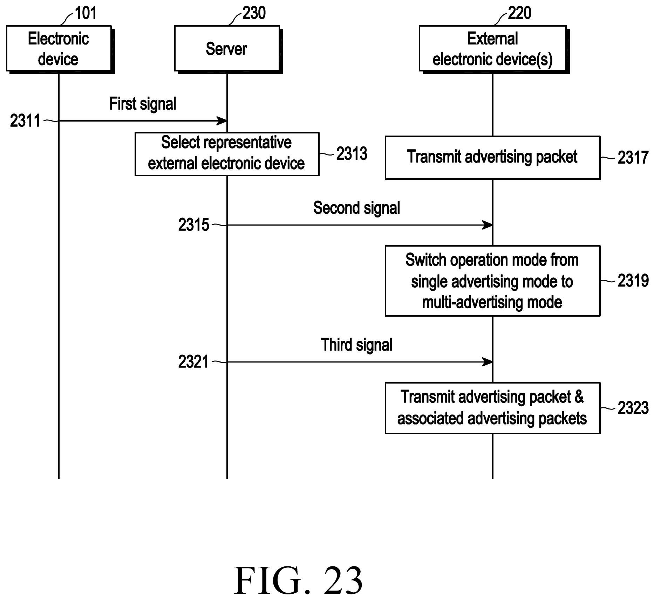

FIG. 23 is a signal flow diagram illustrating a procedure for informing presence of an adjacent external electronic device in an IoT-based service according to an embodiment.

Referring to FIG. 23, in operation 2311, an electronic device 101 (e.g., an electronic device 101 in FIG. 1 or 2) may transmit a first signal for requesting to apply a multi-advertising mode for a smart home service (e.g., Samsung^{™} SmartThings service), which is a service based on an IoT technology, to a server 230 (e.g., a server 108 in FIG. 1 or a server 230 in FIG. 2 or 4). The electronic device 101 may be a manager device (e.g., a smartphone) which manages the smart home service.

The server 230, which receives the first signal for requesting to applicate the multi-advertising mode for the smart home service from the electronic device 101, may select an external electronic device which will operate as a representative external electronic device in the multi-advertising mode in operation 2313. The server 230 may select the representative external electronic device from among external electronic devices existing in at least one of a set space where the smart home service is provided or various spaces (e.g., a first space 500, a second space 510, a third space 520, and/or a fourth space 530 of FIG. 5 or 6) included in the set space as follows.
(1) If there is one external electronic device capable of performing a transmission function among external electronic devices existing in the set space or the at least one of the various spaces, the corresponding external electronic device may be selected as the representative external electronic device.
(2) If there are a plurality of external electronic devices capable of performing the transmission function among the external electronic devices existing in the set space or the at least one of the various spaces, an external electronic device corresponding to a product category selected by a user input of the electronic device 101 which manages the smart home service may be selected as the representative external electronic device.
(3) If there are the plurality of external electronic devices capable of performing the transmission function among the external electronic devices existing in the set space or the at least one of the various spaces, an external electronic device existing in a space selected by a user input among the set space or the various spaces may be selected as the representative external electronic device.
(4) If there are the plurality of external electronic devices capable of performing the transmission function among the external electronic devices existing in the set space or the at least one of the various spaces, but there is no external electronic device capable of performing the transmission function in the space selected by the user input among the set space or the various spaces corresponding to the smart home service, an external electronic device existing in a space associated with the selected space may be selected as the representative external electronic device. In an embodiment, an association relationship among spaces may be preset. For example, as described in FIG. 5 and 6, if a total of four spaces from a first space to a fourth space exist, it may be set such that the first space has an association relationship with the second space, and the third space has an association relationship with the fourth space.

If there are the plurality of external electronic devices capable of performing the transmission function among the external electronic devices existing in the set space or the at least one of the various spaces, but there is no external electronic device capable of performing the transmission function in the space selected by the user input among the set space or the various spaces corresponding to the smart home service or in the space associated with the selected space, an external electronic device existing in another space may be selected as the representative external electronic device.

(5) If there are the plurality of external electronic devices capable of performing the transmission function among the external electronic devices existing in the set space or the at least one of the various spaces, and the plurality of external electronic devices are distributed across a plurality of spaces, an external electronic device existing in a space where the number of external electronic devices to be included is maximum may be selected as the representative external electronic device.

The server 230, which selects the external electronic device which will operate as the representative external electronic device in the multi-advertising mode, may transmit a second signal for requesting an external electronic device 220 (e.g., an electronic device 102 or 104 in FIG. 1, an external electronic device(s) 220 in FIG. 2, or an external electronic device 230 in FIG. 3) to operate as a representative external electronic device for the smart home service in operation 2315.

While transmitting an advertising packet based on a set period in operation 2317, the external electronic device 220, which receives, from the server 230, the second signal for requesting to operate as the representative external electronic device for the smart home service, may switch its operation mode from a single advertising mode to a multi-advertising mode in operation 2319. The external electronic device 220, which switches to the multi-advertising mode, may receive, from the server 230, a third signal including information related to associated external electronic devices to be transmitted in the multi-advertising mode in operation 2321.

The external electronic device 220, which receives the third signal including the information related to the associated external electronic devices from the server 230, may, in operation 2323, transmit (for example, broadcast) an advertising packet of the external electronic device 220 and associated advertising packets for the associated external electronic devices based on any one of a first transmission type, a second transmission type, and/or a third transmission type. A case in which the external electronic device 220 receives the information related to the associated external electronic devices from the server 230 and transmits the associated advertising packets for the associated external electronic devices based on the received information related to the associated external electronic devices has been described as an example, however, the external electronic device 220 may also receive the information related to the associated external electronic devices from the associated external electronic devices, and transmit the associated advertising packets for the associated external electronic devices based on the received information related to the associated external electronic devices.

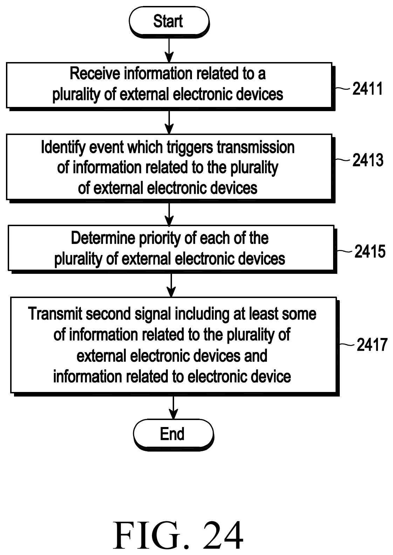

FIG. 24 is a flowchart illustrating an operating process of an electronic device according to an embodiment.

Referring to FIG. 24, an electronic device (e.g., an electronic device 102 or 104 in FIG. 1, an external electronic device(s) 220 in FIG. 2, or an external electronic device 230 in FIG. 3) (e.g., a processor 304 in FIG. 3) may receive, in operation 2411, a first signal including information related to a plurality of external electronic devices (e.g., the electronic device 102 or 104 in FIG. 1, the external electronic device(s) 220 in FIG. 2, or the external electronic device 230 in FIG. 3) via communication circuitry. In an embodiment, the electronic device may also receive the information related to the plurality of external electronic devices from a server (e.g., a server 108 in FIG. 1 or a server 230 in FIG. 2 or 4) or from the plurality of external electronic devices.

The electronic device, which receives the information related to the plurality of external electronic devices, may identify an event which triggers transmission of the information related to the plurality of external electronic devices in operation 2413.

The electronic device, which identifies the event which triggers the transmission of the information related to the plurality of external electronic devices, may determine a priority of each of the plurality of external electronic devices based on the event in operation 2415.

The electronic device, which determines the priority of each of the plurality of external electronic devices, may transmit (for example, broadcast) a second signal including at least some of the information related to the plurality of external electronic devices and information related to the electronic device, based on the priority of each of the plurality of external electronic devices in operation 2417.

In an embodiment, the electronic device may determine at least one external electronic device whose related information will be included in the second signal among the plurality of external electronic devices based on the priority of each of the plurality of external electronic devices, and transmit the second signal including at least some of information related to the at least one external electronic device and the information related to the electronic device. In an embodiment, a set condition may include at least one of a first condition based on places where the plurality of external electronic devices are located, a second condition based on time periods in which the plurality of external electronic devices are used, a third condition based on device categories of the plurality of external electronic devices, or a fourth condition based on a user input to the plurality of external electronic devices. In an embodiment, an event may include at least one of an event for receiving a third signal requesting to transmit information related to the plurality of external electronic devices from another external electronic device (e.g., the electronic device 101 in FIG. 1 or 2) or a server, or an event for switching to an operation mode for transmitting at least some of the information related to the plurality of external electronic devices and the information related to the electronic device.

According to an embodiment of the disclosure, a storage medium storing at least one computer readable instruction may be provided.

According to an embodiment of the disclosure, at least one instruction, when executed by one or more processors (304) including processing circuitry of an electronic device (102; 104; 220) individually or collectively, may cause the electronic device to perform at least one operation.

According to an embodiment of the disclosure, the at least one operation may comprise receiving a first signal including information related to a plurality of external electronic devices (102; 104; 220).

According to an embodiment of the disclosure, the at least one operation may comprise identifying an event which triggers transmission of the information related to the plurality of external electronic devices.

According to an embodiment of the disclosure, the at least one operation may comprise, based on the event, determining a priority of each of the plurality of external electronic devices.

According to an embodiment of the disclosure, the at least one operation may comprise, based on the priority of each of the plurality of external electronic devices, transmitting a second signal including at least a portion of the information related to the plurality of external electronic devices and information related to the electronic device.

According to an embodiment of the disclosure, a storage medium storing at least one computer readable instruction may be provided.

According to an embodiment of the disclosure, at least one instruction, when executed by one or more processors (304) including processing circuitry of an electronic device (102; 104; 220), may cause the electronic device to perform at least one operation.

According to an embodiment of the disclosure, the at least one operation may comprise identifying an event which triggers transmission of first information for at least one external electronic device (101) to control at least one other external electronic device (102; 104; 220).

According to an embodiment of the disclosure, the at least one operation may comprise, based on the event, transmitting a first signal including the first information and second information related to the electronic device.

According to an embodiment of the disclosure, a storage medium storing at least one computer readable instruction may be provided.

According to an embodiment of the disclosure, the at least one computer readable instruction, when executed by one or more processors (120) of an electronic device (101), may cause the electronic device to perform at least one operation.

According to an embodiment of the disclosure, the at least one operation may comprise receiving, from an external electronic device (102; 104; 220), a first signal including third information which is at least a portion of first information related to the external electronic device and second information related to a plurality of other external electronic devices (102; 104; 220).

According to an embodiment of the disclosure, the at least one operation may comprise, based on reception of the first signal, outputting a screen related to the first information and the third information, or performing a control operation for the external electronic device and the plurality of other external electronic devices based on the first information and the third information.

According to an embodiment of the disclosure, a storage medium storing at least one computer readable instruction may be provided.

According to an embodiment of the disclosure, at least one instruction, when executed by one or more processors (120) including processing circuitry of an electronic device (101), may cause the electronic device to perform at least one operation.

According to an embodiment of the disclosure, the at least one operation may comprise receiving, from at least one external electronic device (102; 104; 220), a first signal including first information related to the at least one external electronic device and second information used for the electronic device to control at least one other external electronic device (102; 104; 220).

According to an embodiment of the disclosure, the at least one operation may comprise, based on reception of the first signal, outputting a screen related to the first information and the second information, or performing a control operation for the at least one external electronic device and the at least one other external electronic device based on the first information and the second information.

## Claims

1. An electronic device (102; 104; 220), comprising:
communication circuitry (302);
one or more processors (304) including processing circuitry; and
memory (306) storing instructions that, when executed by the one or more processors individually or collectively, cause the electronic device to:
receive a first signal including information related to a plurality of external electronic devices (102; 104; 220) via the communication circuitry,
identify an event which triggers transmission of the information related to the plurality of external electronic devices,
based on the event, determine a priority of each of the plurality of external electronic devices, and
based on the priority of each of the plurality of external electronic devices, transmit, via the communication circuitry, a second signal including at least a portion of the information related to the plurality of external electronic devices and information related to the electronic device.

2. The electronic device of claim 1, wherein the event includes at least one of:
an event of receiving, from another external electronic device (101; 108; 230) via the communication circuitry, a third signal requesting to transmit the information related to the plurality of external electronic devices, or
an event for switching to an operation mode for transmitting at least the portion of the information related to the plurality of external electronic devices and the information related to the electronic device.

3. The electronic device of claim 1 or 2, wherein the instructions, when executed by the one or more processors individually or collectively, cause the electronic device to:
based on the priority of each of the plurality of external electronic devices, determine at least one external electronic device whose related information is to be included in the second signal among the plurality of external electronic devices, and
transmit, via the communication circuitry, the second signal including at least a portion of information related to the at least one external electronic device and the information related to the electronic device.

4. The electronic device of claim 3, wherein the instructions, when executed by the one or more processors individually or collectively, cause the electronic device to:
determine the priority of each of the plurality of external electronic devices based on a set condition, and
wherein the set condition includes at least one of:
a first condition based on places at which the plurality of external electronic devices are located,
a second condition based on time zones during which the plurality of external electronic devices are used,
a third condition based on device categories of the plurality of external electronic devices, or
a fourth condition based on a user input for the plurality of external electronic devices.

5. The electronic device of any one of claims 1 to 4, wherein at least the portion of the information related to the plurality of external electronic devices includes device types of the plurality of external electronic devices.

6. An electronic device (101), comprising:
communication circuitry (190);
one or more processors (120) including processing circuitry;
a display (160); and
memory (130) storing instructions that, when executed by the one or more processors individually or collectively, cause the electronic device to:
receive, via the communication circuitry from an external electronic device (102; 104; 220), a first signal including third information which is at least a portion of first information related to the external electronic device and second information related to a plurality of other external electronic devices (102; 104; 220), and
based on reception of the first signal, output, via the display, a screen related to the first information and the third information, or perform a control operation for the external electronic device and the plurality of other external electronic devices based on the first information and the third information.

7. The electronic device of claim 6, wherein the first signal is received if an event triggering transmission of the third information is identified by the external electronic device.

8. The electronic device of claim 7, wherein the event includes at least one of:
an event that the external electronic device receives, from the electronic device or a server (108; 230), a second signal requesting to transmit the information related to the plurality of other external electronic devices, or
an event that the external electronic device switches to an operation mode for transmitting the third information and the first information.

9. The electronic device of any one of claims 6 to 8, wherein a priority for each of the plurality of other external electronic devices is determined based on a set condition, and
wherein, based on the priority, at least one other external electronic device whose related information is to be included in the first signal is determined among the plurality of other external electronic devices.

10. The electronic device of claim 9, wherein the set condition includes at least one of:
a first condition based on places at which the plurality of other external electronic devices are located,
a second condition based on time zones during which the plurality of other external electronic devices are used,
a third condition based on device categories of the plurality of other external electronic devices, or
a fourth condition based on a user input for the plurality of other external electronic devices.

11. A storage medium storing at least one computer readable instruction, wherein the at least one computer readable instruction, when executed by one or more processors (120) of an electronic device (101) individually or collectively, causes the electronic device to perform at least one operation,
the at least one operation comprising:
receiving, from an external electronic device (102; 104; 220), a first signal including third information which is at least a portion of first information related to the external electronic device and second information related to a plurality of other external electronic devices (102; 104; 220), and
based on reception of the first signal, outputting a screen related to the first information and the third information, or performing a control operation for the external electronic device and the plurality of other external electronic devices based on the first information and the third information

12. The storage medium of claim 11, wherein the first signal is received if an event triggering transmission of the third information is identified by the external electronic device.

13. The storage medium of claim 12, wherein the event includes at least one of:
an event that the external electronic device receives, from the electronic device or a server (108; 230), a second signal requesting to transmit the information related to the plurality of other external electronic devices, or
an event that the external electronic device switches to an operation mode for transmitting the third information and the first information.

14. The storage medium of any one of claims 11 to 13, wherein a priority for each of the plurality of other external electronic devices is determined based on a set condition, and
wherein, based on the priority, at least one other external electronic device whose related information is to be included in the first signal is determined among the plurality of other external electronic devices.

15. The storage medium of claim 14, wherein the set condition includes at least one of:
a first condition based on places at which the plurality of other external electronic devices are located,
a second condition based on time zones during which the plurality of other external electronic devices are used,
a third condition based on device categories of the plurality of other external electronic devices, or
a fourth condition based on a user input for the plurality of other external electronic devices.
